# EUROPÄISCHE PATENTANMELDUNG

(11) **EP 4 296 107 A1**
(43) Veröffentlichungstag der Anmeldung: **27.12.2023**
(21) Anmeldenummer: 22180746.4
(22) Anmeldetag: 23.06.2022
(51) Int. Cl.: B60L 5/26, B60L 1/00, B60L 1/08, B60L 50/53, B60L 50/60, B60L 53/14, B60L 53/36, B60H 1/00, B60H 1/32, B60P 3/20, B60L 53/31, B62D 33/04, B60K 1/04

(54) **ANHÄNGER MIT STROMABNEHMER**

(71) Anmelder: Schmitz Cargobull AG, 48341 Altenberge (DE)
(72) Erfinder: Schanzmann, Martin, 46395 Bocholt (DE); Kaup, Carsten, 48653 Coesfeld (DE); Lannoije, Marnix, 48341 Altenberge (DE)
(74) Vertreter: Cohausz & Florack

(57) **Zusammenfassung**

Es wird ein Anhänger (100), insbesondere ein Nutzanhänger, für Straßenfahrzeuge vorgeschlagen, auf welchem ein ausfahrbarer Stromabnehmer (200) oder ein elektrisches Kontaktelement für einen inversen Stromabnehmer angeordnet ist.

## Beschreibung

### Gebiet

Beispielhafte Ausführungsformen des offenbarten Gegenstands betreffen einen Anhänger für Straßenfahrzeuge, insbesondere einen Nutzfahrzeuganhänger.

### Hintergrund

Im Zuge der fortschreitenden Elektrifizierung des Verkehrs, insbesondere des Straßenverkehrs, bleibt der Bereich der straßenbasierten Logistik nicht ausgespart. So werden heutzutage nicht nur private Pkw sondern zunehmend auch Nutzfahrzeuge wie beispielsweise Kraftomnibusse, Baumaschinen oder Lastkraftwagen (Lkw) elektrisch angetrieben.

Üblicherweise weisen elektrifiziert Fahrzeuge einen Energiespeicher auf. Üblich sind beispielsweise Lithium-Ionen Akkumulatoren. Diese müssen vor Bereitstellung mit Energie aufgeladen werden. Hierfür ist üblicherweise am Fahrzeug eine Ladeelektronik vorgesehen.

Bei Nutzstraßenfahrzeugen ist es ferner üblich, dass diese mehrteilig ausgeführt sind. So ist oft einerseits zumindest ein Anhänger vorgesehen und andererseits ein motorisiertes Nutzfahrzeug, insbesondere eine Zugmaschine, welches mit dem Anhänger gekoppelt wird. Energiespeicher können sowohl in dem motorisierten Nutzfahrzeug als auch im Anhänger angeordnet sein. Herkömmlich ist dabei die kostspielige und sensible Ladungselektronik für die Aufladung der Energiespeicher allerdings in dem motorisierten Nutzfahrzeug angeordnet.

Hieraus resultiert das Problem eines Engpasses in der Energiezufuhr zu den Anhängern, insbesondere zu den Energiespeicher in Anhängern, von mehrteiligen motorisierten Nutzfahrzeugen.

Die für Nutzfahrzeuge typischen langen Fahrzeiten und geringen Ruhezeiten bedeuten zudem besonders hohe Herausforderungen für die Ladeelektronik. Herkömmliche Ladeelektroniken sind selbst bei Hochgeschwindigkeitsladevorgängen häufig noch zu langsam und verursachen lange Fahrpausen.

### Zusammenfassung einiger beispielhafter Ausführungsformen der Erfindung

Eine dem offenbarten Gegenstand zugrundeliegende Aufgabe ist es daher, einen Anhänger für Straßenfahrzeuge möglichst zeitsparend mit elektrischer Energie versorgen zu können.

Gegenständlich wird die Aufgabe durch einen Anhänger für Straßenfahrzeuge nach Anspruch 1 gelöst.

Gemäß einem Aspekt der gegenständlichen Lehre wird ein Anhänger für Straßenfahrzeuge offenbart, wobei der Anhänger umfasst:
- (i) einen aus einer eingefahrenen Position in eine ausgefahrene Position ausfahrbaren Stromabnehmer (200), wobei
   der Stromabnehmer (200) benachbart zu einer in eine Fahrtrichtung (150) des Anhängers (100) weisenden Stirnwand des Anhängers (100) angeordnet ist, wobei
   der Stromabnehmer (200) in der eingefahrenen Position vollständig unterhalb einer Oberkante (120) der Stirnwand angeordnet ist, und wobei der Stromabnehmer (200) in der ausgefahrenen Position die Oberkante (120) der Stirnwand zumindest teilweise nach oben überragt. oder
- (ii) ein elektrisches Kontaktelement für einen inversen Stromabnehmer, wobei das elektrische Kontaktelement für einen inversen Stromabnehmer benachbart zu einer in eine Fahrtrichtung (150) des Anhängers (100) weisenden Stirnwand des Anhängers (100) angeordnet ist, wobei
   das elektrische Kontaktelement für einen inversen Stromabnehmer vollständig unterhalb einer Oberkante (120) der Stirnwand angeordnet ist.

Beispielsweise kann es sich bei dem gegenständlichen Anhänger um einen Anhänger handeln, welcher sich für die Kopplung mit einem motorisierten Straßennutzfahrzeug eignet. Ein motorisiertes Straßennutzfahrzeug kann ein Lastkraftwagen sein, insbesondere eine Zugmaschine wie beispielsweise eine Anhänger-Zugmaschine, eine Sattelzugmaschine und/oder ein Traktor. Eine Kategorisierung von Kraftfahrzeugen und nähere Definitionen der genannten Fahrzeugtypen lassen sich beispielsweise der Norm DIN 70010 entnehmen. Insbesondere kann der offenbarte Anhänger für Straßenfahrzeuge ein Nutzfahrzeuganhänger sein. Ein Nutzfahrzeuganhänger ist zum Beispiel ein Anhänger für einen Lastkraftwagen, wie ein Starrdeichselanhänger oder ein Gelenkdeichselanhänger oder ein Sattelauflieger. Solche Nutzfahrzeuganhänger sind insbesondere für den Transport von Gütern, vorzugsweise Stückgütern, im öffentlichen Straßenverkehr vorgesehen. Zu diesem Zweck weisen Nutzfahrzeuganhänger unterschiedliche Arten von Nutzfahrzeugaufbauten auf, welche der Aufnahme der zu transportierenden Güter in einem Laderaum dienen. Der Laderaum ist typischerweise durch einen Ladeboden, ein Dach sowie Außenwände umfassend Seitenwände, eine Stirnwand und eine Rückwand begrenzt. Die Stirnwand begrenzt den Laderaum in Fahrtrichtung, und die Rückwand begrenz den Laderaum entgegengesetzt der Fahrtrichtung. So sind beispielsweise Kofferaufbauten mit festen Seitenwänden, einer festen Stirnwand, einer durch Flügeltüren gebildeten Rückwand und einem festen Dach bekannt, welche den Laderaum umschließen. Da die Kofferaufbauten geschlossen sind, sind Kofferaufbauten in besonderem Maße für den Transport von feuchtigkeitsempfindlichen und/oder temperaturempfindlichen Gütern, also beispielsweise für den sogenannten Trockentransport und/oder den Kühltransport geeignet. Neben Kofferaufbauten sind zudem sogenannte Planenaufbauten bekannt, bei denen die Seitenwände und das Dach durch wenigstens eine Plane verschlossen sind. Die Stirnwand ist bei Planenaufbauten meist als feste Wand ausgebildet, während die Rückwand regelmäßig durch zwei Flügeltüren gebildet wird, um den Laderaum bedarfsweise von hinten zu beladen. Wenn eine Plane entlang der Seitenwand verschoben werden kann, spricht man auch von sogenannten Curtainsidern. Dementsprechend soll unter einem Nutzfahrzeugaufbau beispielsweise ein Kofferaufbau, ein Planenaufbau und/oder ein Curtainsider verstanden werden.

Der offenbarte Anhänger umfasst einen Stromabnehmer oder ein elektrisches Kontaktelement für einen inversen Stromabnehmer. Auch kann beides und/oder mehrere Stromabnehmer und/oder mehrere elektrische Kontaktelemente für einen inversen Stromabnehmer vorgesehen sein.

Ein elektrisches Kontaktelement für einen inversen Stromabnehmer kann dazu eingerichtet sein, von einem inversen Stromabnehmer kontaktiert zu werden. Insbesondere kann der inverse Stromabnehmer dabei an einer Energieversorgungseinrichtung, insbesondere einer Ladeinfrastruktur angeordnet sein. Insbesondere kann der inverse Stromabnehmer von einer eingefahrenen in eine ausgefahrene Position überführbar sein. Dabei kann der inverse Stromabnehmer beispielsweise eingerichtet sein, in der ausgefahrenen Position mit dem elektrischen Kontaktelement für einen inversen Stromabnehmer zu kontaktieren (z.B. zu berühren). Ferner kann der inverse Stromabnehmer eingerichtet sein, in einer eingefahrenen Position das elektrische Kontaktelement für einen inversen Stromabnehmer nicht zu kontaktieren (z.B. nicht zu berühren). Der inverse Stromabnehmer kann analog zu dem hierunter beschriebenen Stromabnehmer gemäß Ausführungsbeispielen des Anhängers aufgebaut sein. Wenn im Folgenden von dem Stromabnehmer die Rede ist, ist damit der Stromabnehmer des Anhängers gemeint. Dabei sollen Offenbarungen im Zusammenhang mit dem Stromabnehmer des Anhängers soweit dies für den Fachmann sinnvoll ist auch für den inversen Stromabnehmer gelten.

Der Stromabnehmer oder das elektrische Kontaktelement für einen inversen Stromabnehmer ist insbesondere dafür eingerichtet, elektrische Energie, die von einer externen elektrischen Energieversorgung bereitgestellt wird, aufzunehmen. Dabei soll unter einer externen elektrischen Energieversorgung beispielsweise ein von dem Anhänger externes elektrisches Energieversorgungsnetz (z.B. ein öffentliches Energieversorgungsnetz) und/oder eine von dem Anhänger externe elektrische Energieversorgung (z.B. eine Batterie und/oder ein elektrischer Generator wie ein durch einen Verbrennungsmotor und/oder Windkraft angetriebener elektrischer Generator) verstanden werden.

Der Stromabnehmer ist beispielsweise dazu eingerichtet, einen mechanischen Kontakt und einen elektrischen Kontakt zu einem Energiebereitstellungselement (z.B. in Form eines elektrischen Kontaktelements der externen Energieversorgung) herstellen zu können. Gleichermaßen ist das elektrische Kontaktelement für einen inversen Stromabnehmer beispielsweise dazu eingerichtet, von einem Energiebereitstellungselement der externen Energieversorgung (z.B. in Form eines Kontaktelements des inversen Stromabnehmers) kontaktiert zu werden, um einen mechanischen und elektrischen Kontakt zu dem Energiebereitstellungselement der externen Energieversorgung herzustellen. Der Kontakt kann beispielsweise direkt (beispielsweise unmittelbar) oder indirekt (beispielsweise mittelbar über zumindest ein weiteres Element) erfolgen. Die Aufnahme der elektrischen Energie durch den Stromabnehmer oder das elektrische Kontaktelement für einen inversen Stromabnehmer kann dementsprechend konduktiv erfolgen. Dabei soll unter einer konduktiven Aufnahme der von der externen Energieversorgung bereitgestellten elektrischen Energie verstanden werden, dass der Stromabnehmer oder das elektrische Kontaktelement für einen inversen Stromabnehmer in mechanischen Kontakt und elektrischem Kontakt mit dem Energiebereitstellungselement der externen Energieversorgungsteht und die Aufnahme der Energie zumindest im Wesentlichen an der Kontaktstelle stattfindet. Dies hat den Vorteil besonders geringer Ohm'scher Verluste bei der Energieaufnahme. Auch kann Gleichstrom übertragen werden. Es versteht sich jedoch, dass der offenbarte Gegenstand nicht auf eine konduktiven Aufnahme der von der externen Stromversorgung bereitgestellten elektrischen Energie beschränkt ist. Zusätzlich oder alternativ ist es beispielsweise möglich, eine induktive elektrische Aufnahme der durch die externe Energieversorgung bereitgestellten elektrischen Energie durch den Stromabnehmer oder das elektrische Kontaktelement für einen inversen Stromabnehmer zu realisieren. Eine induktive elektrische Energieübertragung hat den Vorteil, dass die Aufnahme der Energie auch ohne mechanischen Kontakt und elektrischen Kontakt zwischen dem Energiebereitstellungselement der elektrischen Energieversorgung und dem Stromabnehmer oder dem elektrischen Kontaktelement für einen inversen Stromabnehmer stattfinden kann.

Wenn hier, im Folgenden und/oder Vorangehenden von der Bereitstellung oder Übertragung von Energie die Rede ist, ist damit zumindest unter anderem auch die Bereitstellung oder Übertragung von Leistung gemeint. Umgekehrt soll unter der Bereitstellung oder Übertragung von Leistung auch die Bereitstellung oder Übertragung von Energie verstanden werden.

Der offenbarte Stromabnehmer ist aus einer eingefahrenen Position in eine ausgefahrene Position ausfahrbar. Der offenbarte Stromabnehmer kann insbesondere zusätzlich oder alternativ in eine eingefahrene Position einfahrbar sein, insbesondere aus der ausgefahrenen Position.

Das elektrische Kontaktelement für einen inversen Stromabnehmer kann zumindest teilweise oder vollständig unbeweglich sein. Beispielsweise kann das elektrische Kontaktelement für einen inversen Stromabnehmer aneinander fest verbundene Komponenten umfassen. Auch kann das elektrische Kontaktelement für einen inversen Stromabnehmer zumindest eine bewegliche Komponente umfassen. Beispielsweise kann ein Kontakt des elektrischen Kontaktelements für einen inversen Stromabnehmer gefedert gelagert sein, insbesondere an anderen Komponenten des elektrischen Kontaktelements für einen inversen Stromabnehmer.

Der Stromabnehmer ist zumindest teilweise beweglich gelagert. Der Stromabnehmer umfasst beispielsweise zumindest einen beweglichen Teil. Der Stromabnehmer kann insbesondere zumindest ein bewegliches Element umfassen, wobei das bewegliche Element beweglich gelagert ist. Durch die Bewegung des zumindest einen beweglichen Elements kann der Stromabnehmer eingefahren und/oder ausgefahren werden. Auch kann der Stromabnehmer mehrere bewegliche Elemente umfassen, welche vorzugsweise zumindest teilweise miteinander verbunden sind und/oder aneinander beweglich gelagert sind.

Beispielsweise kann der Stromabnehmer zumindest ein bewegliches Element umfassen, welches beispielsweise drehbar gelagert ist. Durch Drehung des beweglichen Elements kann dieses, insbesondere ein von der drehbaren Lagerung beabstandeter Bereich des Elements, in seiner Position geändert, insbesondere entlang einer Kreisbahn bewegt werden.

Beispielsweise kann der Stromabnehmer zusätzlich oder alternativ ein bewegliches Element umfassen, welches im Wesentlichen entlang einer Geraden beweglich gelagert ist. Durch Bewegung des Elements entlang der Geraden kann die Position des beweglichen Elements verändert werden.

Eine Bewegung zumindest des zumindest einen beweglichen Elements kann zu einem Ausfahren und/oder zu einem Einfahren des Stromabnehmers führen.

In einem Ausführungsbeispiel kann der Stromabnehmer einen Pantographen umfassen. Ein Pantograph kann.zumindest vier Elemente umfassen. Ein jeweiliges Element ist mit jeweils zwei anderen der Elemente durch ein jeweiliges Drehgelenk an einer jeweiligen Verbindeposition verbunden. Der Pantograph umfasst somit zumindest vier Drehgelenke an vier voneinander verschiedenen Verbindepositionen. Die Verbindepositionen können im Wesentlichen in einer Ebene liegen. Die Drehgelenke können eine Bewegung entlang einer jeweiligen Drehebene erlauben. Die Drehebenen der Drehgelenke können im Wesentlichen parallel zueinander ausgerichtet sein. Zwischen den zwei Drehgelenken eines jeweiligen Elements kann eine Abstandsstrecke definiert werden, welche sich insbesondere von der Verbindeposition eines ersten der Drehgelenke zu der Verbindeposition des zweiten der Drehgelenke des Elements erstreckt. Die Abstandsstrecken eines ersten Paars aus einem ersten und einem zweiten der zumindest vier Elemente, können im Wesentlichen parallel zueinander ausgerichtet sein. Die Abstandsstrecken eines zweiten Paars aus einem dritten und einem vierten der zumindest vier Elemente können im Wesentlichen parallel zueinander ausgerichtet sein. Zumindest ein Element kann entlang der Ausrichtung der jeweiligen Abstandsstrecke über zumindest eines seiner Drehgelenke hinausragen. Das Element kann also in Richtung der Abstandsstrecke länger als die Abstandsstrecke sein.

Mittels des Pantographen lässt sich eine verstärkte Bewegung von zumindest Bereichen des Stromabnehmers erreichen. Insbesondere kann ein erster beweglicher Teil des Stromabnehmers entlang einer ersten Distanz bewegt werden und zumindest ein zweiter, vom ersten verschiedener Teil des Stromabnehmers kann dadurch verursacht entlang einer zweiten Distanz bewegt werden, wobei die zweite Distanz größer als die erste ist. Die Bewegung des ersten Teils kann beispielsweise mittels eines Aktors verursacht werden. Der Pantograph ermöglicht eine kompakte Bauform des Stromträgers bei gleichzeitig hoher Konfigurierbarkeit. Stromabnehmer, die einen Pantographen umfassen, werden auch als Pantographenstromabnehmer und/oder Scherenstromabnehmer bezeichnet und sind insbesondere von Schienenfahrzeugen bekannt.

Der Stromabnehmer kann beispielsweise einen Aktör aufweisen. Der Aktor kann beispielsweise dafür eingerichtet sein, die Position und/oder Ausrichtung zumindest eines Teils des Stromabnehmers zu beeinflussen. Beispielsweise kann es sich bei dem Aktor um einen Motor handeln, beispielsweise einen Linearmotor, einen Rotationsmotor und/oder Kombinationen hieraus. Besonders vorteilhaft ist der Einsatz eines Servomotors, bei dem sich eine gegebene Motorstellung, beispielsweise eine Winkelstellung eines Rotationsmotors oder eine Position eines Linearmotors, einstellen und halten lässt. Andere Aktoren sind ebenfalls möglich, beispielsweise hydraulische oder pneumatische Aktoren, thermisch formbare Materialien und/oder Kombinationen hieraus.

Der Aktor ist insbesondere dazu eingerichtet, zumindest einen beweglichen Teil, also zumindest ein bewegliches Element, des Stromabnehmers zu bewegen. Zum Beispiel kann der Aktor eingerichtet sein, den Stromabnehmer in die ausgefahrene Position und/oder in die eingefahrene Position zu bewegen.

Auch können mehrere Aktoren vorgesehen sein. So kann ein erster Aktor eingerichtet sein, den Stromabnehmer in die ausgefahrene Position zu bewegen, und ein zweiter, insbesondere vom ersten Aktor verschiedener Aktor, kann eingerichtet sein, den Stromabnehmer in die eingefahrene Position zu bewegen.

Der Stromabnehmer oder das elektrische Kontaktelement für einen inversen Stromabnehmer kann zumindest einen unbeweglichen Teil aufweisen.

Der unbewegliche Teil des Stromabnehmers oder des elektrischen Kontaktelements für einen inversen Stromabnehmer kann beispielsweise eine Halterung umfassen. Die Halterung kann insbesondere dazu eingerichtet sein, zumindest einen oder alle beweglichen Teile des Stromabnehmers zu fixieren, insbesondere in der eingefahrenen Position. Beispielsweise kann die Halterung eine Vorrichtung zur formschlüssigen oder kraftschlüssigen Fixierung zumindest eines beweglichen Elements des Stromabnehmers umfassen. Beispielsweise kann die Halterung eine Greifvorrichtung und/oder eine Klemmvorrichtung umfassen. Beispielsweise kann zumindest ein beweglicher Teil des Stromabnehmers von zumindest einem Teil der Halterung aufgenommen werden und von dieser in einer Position fixiert werden, insbesondere in der eingefahrenen Position. Beispielsweise kann ein Aktor des Stromabnehmers den zumindest einen beweglichen Teil des Stromabnehmers in die Halterung bewegen. Auch kann ein Aktor der Halterung derart bewegen, dass diese den Stromabnehmer fixiert. Beispielsweise kann eine Greifvorrichtung von einem Aktor der Halterung geschlossen und geöffnet werden, insbesondere derart, dass die Halterung den Stromabnehmer in der eingefahrenen Position fixieren kann.

Der Stromabnehmer des offenbarten Anhängers ist benachbart zu einer Stirnwand des Anhängers angeordnet, welche in eine Fahrtrichtung des Anhängers weist. Die Fahrtrichtung des Anhängers ist die übliche Vorwärtsrichtung des Gespanns aus Anhänger und damit gekoppeltem motorisiertem Nutzfahrzeug. Die Fahrtrichtung des Anhängers ist somit die Richtung, in welche der Anhänger von einer Zugmaschine im üblichen Betrieb gezogen wird. Insbesondere ist das motorisierte Nutzfahrzeug in Fahrtrichtung vor dem Anhänger angeordnet.

Eine Stirnwand des Anhängers ist ein Teilbereich der Außenwand und/oder Außenhaut des Anhängers. Die Stirnwand befindet sich an dem in Fahrtrichtung weisenden Ende des Anhängers und/oder begrenzt den Laderaum des Anhängers in Fahrtrichtung. Die Stirnwand kann beispielsweise im Wesentlichen senkrecht zur Fahrtrichtung ausgerichtet sein.

Insbesondere umfasst eine übliche Anhängerform eine im Wesentlichen quaderförmige Form. Eine obere und eine untere Anhängerebene sind hierbei im Wesentlichen parallel zueinander ausgerichtet und im Wesentlichen senkrecht zur Richtung der Schwerkraft. Zum Beispiel verläuft die obere Anhängerebene entlang eines Daches des Anhängers, und die untere Anhängerebene verläuft beispielsweise entlang eines Ladebodens des Anhängers. Eine erste und eine zweite seitliche Anhängerebene sind im Wesentlichen parallel zueinander angeordnet und im Wesentlichen parallel zu sowohl Fahrtrichtung als auch Richtung der Schwerkraft. Jede der seitlichen Anhängerebenen verlaufen beispielsweise entlang einer jeweiligen Seitenwand des Anhängers. Zudem lassen sich eine vordere und eine hintere Anhängerebene definieren, welche jeweils im Wesentlichen senkrecht zur Fahrtrichtung ausgerichtet sind und entlang der Stirnwand (vordere Anhängerebene) oder der Rückwand (hintere Anhängerebene) verlaufen.

Wenn hier und im Folgenden von einer im Wesentlichen senkrechten Ausrichtung die Rede ist, sind davon Winkelbereiche von 90° mit einer Toleranz von weniger als +/-1°, +/- 2°, +/- 5°, +/-10°, +/-15°, +/- 20°, +/- 25° oder +/- 30° umfasst.

Wenn hier und im Folgenden von einer im Wesentlichen parallelen Ausrichtung die Rede ist, sind davon Winkelbereiche von 0° mit einer Toleranz von weniger als +/-1°, +/- 2°, +/- 5°, +/-10°, +/-15°, +/- 20°, +/- 25° oder +/- 30° umfasst.

Wenn eine Ebene im Wesentlichen senkrecht zu einer bestimmten Richtung definiert ist, ist dies gleichbedeutend mit einer Ausrichtung der Flächennormalen auf die jeweilige Ebene, welche im Wesentlichen parallel zu der bestimmten Richtung ausgerichtet ist.

Wenn eine erste Ebene im Wesentlichen parallel zu einer zweiten, anderen Ebene ausgerichtet ist, ist damit insbesondere gemeint, dass die Flächennormalen der jeweiligen Ebenen, der ersten und der zweiten, im Wesentlichen parallel zueinander ausgerichtet sind.

Wenn eine Ebene im Wesentlichen parallel zu einer bestimmten Richtung ausgerichtet ist, ist damit insbesondere gemeint, dass eine Flächennormale im Wesentlichen senkrecht zu der bestimmten Richtung ausgerichtet ist.

Wenn eine Ebene im Wesentlichen senkrecht zu einer bestimmten Richtung ausgerichtet ist, ist hiermit insbesondere gemeint, dass ein Normalenvektor der Ebene im Wesentlichen parallel zu der bestimmten Richtung ausgerichtet ist.

Wenn eine erste Richtung im Wesentlichen in Richtung einer zweiten Richtung ausgerichtet ist, ist hiermit insbesondere gemeint, dass das Skalarprodukt zwischen einem ersten zu der ersten Richtung parallelen Richtungsvektor und einem zweiten zu der zweiten Richtung parallelen Richtungsvektor positiv ist. Insbesondere kann hiervon gemeint sein, dass der zwischen der ersten Richtung und der zweiten Richtung eingeschlossene Winkel 0° mit einer Toleranz von weniger als +/-1°, +/- 2°, +/- 5°, +/-10°, +/-15°, +/- 20°, +/- 25° oder +/- 30° umfasst.

Wenn eine Ebene in Richtung einer bestimmten Richtung weist, ist damit insbesondere gemeint, dass eine Flächennormale der Ebene in Richtung der bestimmten Richtung ausgerichtet ist.

Die Stirnwand des Anhängers befindet sich am in Fahrtrichtung weisenden Ende des Anhängers. Sie dient beispielsweise dazu den Laderaum des Anhängers in Fahrrichtung zu begrenzen. Zum Beispiel weist die Stirnwand in Fahrtrichtung des Anhängers. Beispielsweise ist die Stirnwand zumindest teilweise parallel zu einer Ebene (z.B. der vorderen Anhängerebene) ausgerichtet, welche in Richtung der Fahrtrichtung weist.

Der Stromabnehmer oder das elektrische Kontaktelement für einen inversen Stromabnehmer ist benachbart zu der Stirnwand angeordnet. Hiermit ist beispielsweise gemeint, dass sich der Stromabnehmer oder das elektrische Kontaktelement für einen inversen Stromabnehmer zumindest teilweise in Fahrtrichtung vor der Stirnwand befindet. Zum Beispiel kann vorgesehen sein, dass sich die Ausfahrebene, entlang derer sich der Stromabnehmer ein- und ausfahren lässt, in Fahrtrichtung vor der Stirnwand befindet.

Der Stromabnehmer oder das elektrische Kontaktelement für einen inversen Stromabnehmer kann beispielsweise zumindest teilweise in direktem Kontakt mit zumindest einem Teilbereich der Stirnwand stehen. Auch kann der Stromabnehmer oder das elektrische Kontaktelement für einen inversen Stromabnehmer zumindest teilweise oder vollständig von der Stirnwand in Richtung Fahrtrichtung beabstandet sein.

Der Stromabnehmer oder das elektrische Kontaktelement für einen inversen Stromabnehmer kann beispielsweise an dem Anhänger mechanisch befestigt sein.

Beispielsweise kann der Stromabnehmer oder das elektrische Kontaktelement für einen inversen Stromabnehmer unmittelbar an einem Teil des Anhängers anliegen. Alternativ oder zusätzlich kann der Stromabnehmer oder das elektrische Kontaktelement für einen inversen Stromabnehmer beispielsweise mittelbar über zumindest ein weiteres Element, beispielsweise ein von dem Stromabnehmer oder dem elektrischen Kontaktelement für einen inversen Stromabnehmer verschiedenes Halteelement, mit dem Anhänger verbunden sein.

Insbesondere kann der Stromabnehmer oder das elektrische Kontaktelement für einen inversen Stromabnehmer beispielsweise an der in Fahrtrichtung weisenden Stirnwand oder an einem Element, das sich an der in Fahrrichtung weisenden Stirnwand befindet, befestigt sein. Zusätzlich oder alternativ kann der Stromabnehmer oder das elektrische Kontaktelement für einen inversen Stromabnehmer an einem von der Stirnwand verschiedenen Bereich des Anhängers befestigt sein. Beispielsweise kann der Stromabnehmer oder das elektrische Kontaktelement für einen inversen Stromabnehmer an einer Seitenwand des Anhängers, welche beispielsweise im Wesentlichen parallel zu einer seitlichen Anhängerebene ausgerichtet ist, oder an beiden Seitenwänden, befestigt sein. Auch kann der Stromabnehmer oder das elektrische Kontaktelement für einen inversen Stromabnehmer beispielsweise an einem Teil einer Kupplung des Anhängers befestigt sein. Auch ist es möglich, dass der Stromabnehmer oder das elektrische Kontaktelement für einen inversen Stromabnehmer an einem Teil eines Unterbodens des Anhängers, an einem Fahrgestell und/oder an einem Teil des Daches des Anhängers befestigt ist.

Beispielsweise kann der Stromabnehmer oder das elektrische Kontaktelement für einen inversen Stromabnehmer mit seinem zumindest einen unbeweglichen Teil mit dem Anhänger mechanisch verbunden sein.

Die Stirnwand des Anhängers umfasst eine Oberkante. Die Oberkante beschreibt das obere Ende der Stirnwand. Eine Stirnwand kann neben der Oberkante beispielsweise eine Unterkante sowie zwei Seitenkanten umfassen. Zum Beispiel berührt die Stirnwand das Dach des Anhängers an ihrer Oberkante, den Ladeboden des Anhängers an ihrer Unterkante sowie die Seitenwände des Anhängers an ihren Seitenkanten. Im Falle einer rechteckigen Stirnwand sind die Kanten der Stirnwand beispielsweise Geraden. Zum Beispiel ist die Oberkante in diesem Falle eine Gerade, welche im Wesentlichen parallel zur Stirnwand ausgerichtet ist und im Wesentlichen senkrecht zur Schwerkraftrichtung und entlang des oberen Endes der Stirnwand verläuft.

Wenn ein erstes Element oberhalb eines zweiten Elements angeordnet ist, ist hiermit und im Folgenden gemeint, dass alle Teile des zweiten Elements in Richtung der Schwerkraft vor dem ersten Element liegen. Die Schwerkraft weist hierbei im Wesentlichen in Richtung des Mittelpunkts eines Planeten, auf dem sich das erste und das zweite Element befinden. Anders ausgedrückt ist der Abstand aller Teilbereiche des zweiten Elements zum Mittelpunkt eines Planeten, auf dem sich die beiden Elemente befinden, kleiner als der Abstand aller Teilbereiche des ersten Elements zu dem Mittelpunkt.

Der Stromabnehmer oder das elektrische Kontaktelement für einen inversen Stromabnehmer ist, insbesondere der Stromabnehmer in der eingefahrenen Position, vollständig unterhalb der Oberkante der Stirnwand angeordnet.

Zusätzlich oder alternativ kann der Stromabnehmer in der eingefahrenen Position oder das elektrische Kontaktelement für einen inversen Stromabnehmer zumindest annähernd vollständig unterhalb der Oberkante angeordnet sein. Beispielsweise können hierfür zumindest 99%, 98%, 95%, 90% oder 85% des Stromabnehmers oder des elektrischen Kontaktelements für einen inversen Stromabnehmer, insbesondere dessen Volumens und/oder dessen Querschnittsfläche in Projektion in Fahrtrichtung, unterhalb der Oberkante der Stirnwand angeordnet sein.

Eine Anordnung des Stromabnehmers in der eingefahrenen Position oder des elektrischen Kontaktelements für einen inversen Stromabnehmer unterhalb der Oberkante hat den Vorteil, dass gegebene Höhenbeschränkungen des Anhängers auch bei Vorliegen eines Stromabnehmers oder eines elektrischen Kontaktelements für einen inversen Stromabnehmer eingehalten werden können.

Dadurch, dass der Stromabnehmer oder das elektrische Kontaktelement für einen inversen Stromabnehmer unterhalb der Oberkante angeordnet ist, ist dieser zudem vor mechanischen Einflüssen geschützt. Eine Beschädigung des Stromabnehmers oder des elektrischen Kontaktelements für einen inversen Stromabnehmer ist somit besonders unwahrscheinlich. Insbesondere bietet der Stromabnehmer in der eingefahrenen Position oder das elektrische Kontaktelement für einen inversen Stromabnehmer keinen nennenswerten Windwiderstand für den Anhänger. Der Betrieb des Anhängers wird auf diese Art und Weise besonders effizient, und insbesondere durch das Vorsehen eines Stromabnehmers oder des elektrischen Kontaktelements für einen inversen Stromabnehmer am Anhänger nicht in seiner Effizienz beeinträchtigt.

Der Stromabnehmer kann insbesondere in der ausgefahrenen Position die Oberkante der Stirnwand zumindest teilweise nach oben überragen.

Wenn ein erstes Element ein zweites Element nach oben überragt, ist hiermit insbesondere gemeint, dass zumindest ein Teilbereich des ersten Elements in Schwerkraftrichtung vor dem zweiten Element angeordnet ist. Mit anderen Worten weist zumindest ein Teilbereich des ersten Elements einen größeren Abstand zum Mittelpunkt eines Planeten auf, auf welchem sich das erste und das zweite Element befinden, als alle Teilbereiche des zweiten Elements.

In einer offenbarten Ausführung ist in der ausgefahrenen Position somit zumindest ein Teilbereich des Stromabnehmers oberhalb der Oberkante der Stirnwand angeordnet.

Beispielsweise kann zumindest ein bewegliches Element des Stromabnehmers in der ausgefahrenen Position oberhalb der Oberkante der Stirnwand angeordnet sein.

Gemäß einem Ausführungsbeispiel des Anhängers ist
- an der Stirnwand ein Gehäuse einer Transportkältemaschine angeordnet, wobei der Stromabnehmer oder das elektrische Kontaktelement für einen inversen Stromabnehmer zumindest teilweise oberhalb des Gehäuses der Transportkältemaschine und/oder seitlich des Gehäuses der Transportkältemaschine angeordnet ist, insbesondere der Stromabnehmer (200) in der eingefahrenen Position.

Der Anhänger kann zumindest eine Transportkältemaschine umfassen.

Die Transportkältemaschine kann dazu eingerichtet sein, einen Laderaum des Anhängers zu temperieren, insbesondere zu kühlen und/oder zu heizen. Eine solche Transportkältemaschine kann beispielsweise gekühlte Luft erzeugen, die in den Laderaum des Anhängers geblasen wird. Zu diesem Zweck kann die Transportkältemaschine einen Kühlkreis mit einem durch einen elektrischen Motor angetriebenen Verdichter zum Verdichten eines Kältemittels, einen Kondensator, eine Drosseleinrichtung und einen Verdampfer umfassen. In dem Kühlkreis strömt das von dem Verdichter verdichtete Kältemittel über den Kondensator und eine in Strömungsrichtung hinter dem Kondensator angeordnete Drosseleinrichtung, die beispielsweise als Stellventil ausgebildet sein kann, zu dem Wärmetauscher. In dem Wärmetauscher wird das zuvor verflüssigte Kältemittel expandiert und entzieht dabei einem getrennt von dem Kältemittel durch den Verdampfer geleiteten Luftstrom Wärme, so dass die Luft des Luftstroms gekühlt wird. Die gekühlte Luft dieses Luftstroms wird anschließend in den Laderaum des Anhängers geblasen, um diesen zu kühlen. Auch kann die Transportkältemaschine zumindest einen Temperatursensor umfassen. Beispielsweise kann die Transportkältemaschine ebenfalls ein Steuerungselement umfassen, beispielsweise eine hysteresebasierte Steuerung auf Basis einer von dem Temperatursensor bestimmten Temperatur, insbesondere eine Temperatur im Laderaum des Anhängers.

Die Transportkältemaschine umfasst zumindest ein Gehäuse. Das Gehäuse kann beispielsweise einen Teil der von dem Gehäuse verschiedenen Teile der Transportkältemaschine einhausen. Insbesondere kann das Gehäuse der Transportkältemaschine zumindest den Großteil oder im Wesentlichen alle der von dem Gehäuse verschiedenen Teile der Transportkältemaschine einhausen.

Das Gehäuse kann beispielsweise teiloffen gefertigt sein. Insbesondere kann das Gehäuse Kühlöffnungen aufweisen wie beispielsweise Lüftungsgitter, Perforierungen des Gehäuses, Netze, Schlitze und/oder Kombinationen hieraus.

Auch kann das Gehäuse im Wesentlichen geschlossen sein, insbesondere im Wesentlichen vollständig, insbesondere gasdicht, fluiddicht und/oder druckdicht geschlossen sein.

Das Gehäuse kann beispielsweise dazu eingerichtet sein, Wärme an die Umgebung abzugeben. Beispielsweise kann Wärme per Wärmeleitung und/oder Wärmestrahlung an die Umgebung abgegeben werden. Hierfür kann das Gehäuse beispielsweise zumindest eine oder mehrere Kühlrippen umfassen. Auch ist es möglich, mittels einer Kühlöffnung Wärme per Konvektion an die Umgebung abzugeben. Dies kann passiv über den freien Luftaustausch durch eine Kühlöffhung gewährleistet werden. Alternativ oder zusätzlich kann eine Lüftung der Transportkältemaschine einen Luftstrom aus dem Gehäuse der Transportkältemaschine verursachen.

Das Gehäuse der Transportkältemaschine kann beispielsweise zumindest teilweise aus einem Metallwerkstoff gefertigt sein, beispielsweise Aluminium, Stahl oder anderen Metallwerkstoffen.

Vorzugweise kann das Gehäuse der Transportkältemaschine derart an der Stirnwand angeordnet sein, dass es sich in Fahrtrichtung vor der Stirnwand des Anhängers befindet.

Das Gehäuse der Transportkältemaschine kann mit der Stirnwand des Anhängers verbunden sein. Es versteht sich jedoch, dass das Gehäuse der Transportkältemaschine alternativ oder zusätzlich auch mit einem anderen Teil des Anhängers, beispielsweise einer Seitenwand, einem Dach, einem Unterboden, einem Fahrgestell, einer Kupplung des Anhängers und/oder Kombinationen hieraus befestigt sein kann. Das Gehäuse der Transportkältemaschine kann beispielsweise an einem Teil des Anhängers wie einer Außenwand des Anhängers befestigt sein. Beispiele für eine Befestigung des Gehäuses der Transportkältemaschine an einem Teil des Anhängers ist eine formschlüssige Verbindung (z.B. eine Verschraubung, eine Vernietung, und/oder ein Verrasten der Transportkältemaschine mit dem Teil des Anhängers) oder eine stoffschlüssige Verbindung (z.B. eine Schweißverbindung mit dem Teil des Anhängers) oder eine kraftschlüssige Verbindung (z.B. eine Klemmverbindung).

Der Stromabnehmer oder das elektrische Kontaktelement für einen inversen Stromabnehmer kann das Gehäuse der Transportkältemaschine berühren. Insbesondere kann zumindest ein Teil des Stromabnehmers oder des elektrischen Kontaktelements für einen inversen Stromabnehmer die Oberseite des Gehäuses der Transportkältemaschine berühren.

Der Stromabnehmer oder das elektrische Kontaktelement für einen inversen Stromabnehmer kann, insbesondere der Stromabnehmer in der eingefahrenen Position und/oder in der ausgefahrenen Position, zumindest teilweise oberhalb der Transportkältemaschine und in Fahrtrichtung vor der Stirnwand des Anhängers angeordnet sein. Einer der Vorteile einer solchen Anordnung ist, dass der Stromabnehmer sich nach oben hin ungehindert in die ausgefahrene Position ausfahren lässt oder das elektrische Kontaktelement für einen inversen Stromabnehmer von oben von einem inversen Stromabnehmer kontaktiert (z.B. in einer ausgefahrenen Position des inversen Stromabnehmers) werden kann.

Insbesondere wurde erkannt, dass in typischen Anordnungen des Gehäuses der Transportkältemaschine an der Stirnwand eines Anhängers ein Abstand zwischen der Transportkältemaschine und der Oberkante der Stirnwand verbleibt, der durch eine Anordnung des Stromabnehmers oder des elektrischen Kontaktelements für einen inversen Stromabnehmer an der Oberseite des Gehäuses der Transportkältemaschinen genutzt werden kann. Beispielsweise kann dieser Abstand darin begründet sein, dass die Transportkältemaschine für verschiedene Anhängergeometrien passend, und deshalb nicht stirnwandfüllend, dimensioniert ist. Auch ist in manchen Fällen der Bereich oberhalb der Transportkältemaschine zu Kühlungszwecken freigelassen. So wurde weiterhin erkannt, dass eine Anordnung des Stromabnehmers oder des elektrischen Kontaktelements für einen inversen Stromabnehmer oberhalb der Transportkältemaschine aufgrund der kompakten Abmessungen des Stromabnehmers oder des elektrischen Kontaktelements für einen inversen Stromabnehmer keine nennenswerte Beeinträchtigung der Wärmeabgabe ausgehend von der Transportkältemaschine in ihre Umgebung mit sich bringt. Im Gegenteil kann in vielen Ausgestaltungen des Stromabnehmers dessen oft verästelte Struktur einer Wärmeabgabe zuträglich sein. Der Stromabnehmer kann somit die Funktionen einer Erhöhung der Oberfläche der Transportkältemaschine erfüllen und damit als eine Art Kühlrippe fungieren. Insbesondere die Anordnung im Bereich oberhalb der Transportkältemaschine, in welchem ein hoher Luftaustausch stattfinden kann, kann somit Vorteile für die Wärmeabgabe haben.

Auch kann der Stromabnehmer oder das elektrische Kontaktelement für einen inversen Stromabnehmer insbesondere zumindest teilweise in Fahrtrichtung vor dem Gehäuse der Transportkältemaschine und/oder seitlich neben dem Gehäuse der Transportkältemaschine angeordnet sein. Auch in diesem Fall kann der Stromabnehmer so konfiguriert sein, dass er von der eingefahrenen Position in die ausgefahrene Position ausgefahren werden kann und umgekehrt, ohne von der Transportkältemaschine, insbesondere dem Gehäuse der Transportkältemaschine, behindert zu werden. Das elektrische Kontaktelement für einen inversen Stromabnehmer kann so konfiguriert sein, dass es von einem inversen Stromabnehmer von oben kontaktiert werden kann, ohne dass der inverse Stromabnehmer von der Transportkältemaschine, insbesondere von dem Gehäuse der Transportkältemaschine, behindert wird.

Gemäß einem Ausführungsbeispiel des Anhängers ist der Stromabnehmer oder das elektrische Kontaktelement für einen inversen Stromabnehmer an dem Gehäuse der Transportkältemaschine befestigt. Insbesondere kann der Stromabnehmer oder das elektrische Kontaktelement für einen inversen Stromabnehmer an einer Oberseite des Gehäuses der Transportkältemaschine befestigt sein.

Zum Beispiel kann ein unbeweglicher Teil des Stromabnehmers an dem Gehäuse der Transportkältemaschine befestigt sein.

Die Befestigung des Stromabnehmers (z.B. des unbeweglichen Teils des Stromabnehmers) oder des elektrischen Kontaktelements für einen inversen Stromabnehmer an dem Gehäuse der Transportkältemaschine kann beispielsweise in Form einer formschlüssigen Verbindung, einer kraftschlüssigen Verbindung und/oder einer stoffschlüssigen Verbindung erfolgen. Eine solche Verbindung zwischen dem Stromabnehmer öder dem elektrischen Kontaktelement für einen inversen Stromabnehmer und dem Gehäuse der Transportkältemaschine kann fest sein. Eine feste Verbindung kann hierbei insbesondere als im Wesentlichen starre Verbindung verstanden werden, so dass die relative Position zwischen dem Gehäuse der Transportkältemaschinen (und somit dem Anhänger) und dem Stromabnehmer oder dem elektrischen Kontaktelement für einen inversen Stromabnehmer im Wesentlichen fixiert ist (z.B. abgesehen von der verbleibenden Restbeweglichkeit zueinander aufgrund der natürlichen Elastizität der jeweiligen Materialien der jeweiligen Elemente (z.B. Gehäuse der Transportkältemaschine und Stromabnehmer oder elektrischem Kontaktelement für einen inversen Stromabnehmer).

Gemäß einem Ausführungsbeispiel sind die Transportkältemaschine und der Stromabnehmer oder das elektrische Kontaktelement für einen inversen Stromabnehmer als ein zusammenhängendes Bauteil gefertigt. Beispielsweise können der Stromabnehmer oder das elektrische Kontaktelement für einen inversen Stromabnehmer und die Transportkältemaschine zumindest teilweise in einem gemeinsamen Gehäuse eingehaust sein. Auch können der Stromabnehmer oder das elektrische Kontaktelement für einen inversen Stromabnehmer und die Transportkältemaschine aneinander befestigt gefertigt sein, beispielsweise auf eine der oben beschriebenen Arten und Weisen.

Gemäß einem Ausführungsbeispiel des Anhängers ist der Stromabnehmer (200) dazu eingerichtet, in der ausgefahrenen Position einen Kontakt mit einem elektrischen Kontaktelement einer Ladeinfrastruktur (240), herzustellen, und/oder das elektrische Kontaktelement für einen inversen Stromabnehmer ist dazu eingerichtet, einen Kontakt mit einem inversen Stromabnehmer einer Ladeinfrastruktur herzustellen (z.B. von dem inversen Stromabnehmer kontaktiert zu werden, z.B. in einer ausgefahrenen Position des inversen Stromabnehmers).

Das elektrische Kontaktelement einer Ladeinfrastruktur und/oder der inverse Stromabnehmer ist kein Teil des Anhängers. Zum Beispiel ist das elektrische Kontaktelement einer Ladeinfrastruktur und/oder der inverse Stromabnehmer Teil einer Ladeinfrastruktur wie einer Ladestation.

Das elektrische Kontaktelement einer Ladeinfrastruktur oder der inverse Stromabnehmer einer Ladeinfrastruktur kann oberhalb der Oberkante der Stirnwand des Anhängers und/oder oberhalb des Stromabnehmers angeordnet sein.

Der Stromabnehmer oder das elektrische Kontaktelement für einen inversen Stromabnehmer kann einen oder mehrere elektrische Kontaktbereiche umfassen. Beispielhafte Ausgestaltungen eines solchen Kontaktbereichs sind ein Gleitkontakt, ein Schleifkontakt, eine Schleifleiste, eine Kohlebürste, ein Graphit-Schleifkontakt, ein Steckkontakt (z.B. ein Stecker), ein Aufnahmekontakt (z.B. eine Buchse), ein gefederter Kontakt und/oder Kombinationen hieraus. Im Folgenden wird beispielhaft davon ausgegangen, dass der Stromabnehmer oder das elektrische Kontaktelement für einen inversen Stromabnehmer zumindest zwei elektrische Kontaktbereiche umfasst. Jeder der Kontaktbereiche des Stromabnehmers dient beispielsweise zum Herstellen zumindest eines jeweiligen elektrischen Kontakts mit dem elektrischen Kontaktelement einer Ladeinfrastruktur; und jeder der Kontaktbereiche des elektrischen Kontaktelements für einen inversen Stromabnehmer dient beispielsweise zum Herstellen zumindest eines jeweiligen elektrischen Kontakts mit dem inversen Stromabnehmer einer Ladeinfrastruktur Dementsprechend weist das elektrische Kontaktelement der Ladeinfrastruktur beispielsweise zu jedem der Kontaktbereiche des Stromabnehmerseinen jeweiligen korrespondierenden Kontaktbereich auf; und der inverse Stromabnehmer weist zu jedem der Kontaktbereiche des elektrischen Kontaktelements für einen inversen Stromabnehmer einen jeweiligen korrespondierenden Kontaktbereich auf. Jeder der Kontaktbereiche des Stromabnehmers oder des elektrischen Kontaktelements für einen inversen Stromabnehmer ist über eine elektrische Leitung mit weiteren Komponenten des Stromabnehmers und/oder des elektrischen Kontaktelements für einen inversen Stromabnehmer und/oder des Anhängers elektrisch verbunden.

Wenn der Stromabnehmer oder das elektrische Kontaktelement für einen inversen Stromabnehmer einen Kontakt mit dem elektrischen Kontaktelement einer Ladeinfrastruktur oder dem inversen Stromabnehmer einer Ladeinfrastruktur herstellt, kann dies insbesondere im Bereich der zumindest zwei Kontaktbereiche des Stromabnehmers oder des elektrischen Kontaktelements für einen inversen Stromabnehmer geschehen.

Wie bereits offenbart, kann der Stromabnehmer eingerichtet sein, von einer eingefahrenen Position in eine ausgefahrene Position bewegt zu werden. Auch kann der Stromabnehmer eingerichtet sein, von der ausgefahrenen Position in die eingefahrene Position bewegt zu werden. Zum Beispiel überragt ein beweglicher Teil des Stromabnehmers in der ausgefahrenen Position zumindest teilweise die Oberkante der Stirnwand des Anhängers.

Die zumindest zwei Kontaktbereiche des Stromabnehmers können insbesondere im Bereich des beweglichen Teils des Stromabnehmers angeordnet sein. Beim Bewegen des Stromabnehmers in die ausgefahrene Position wird die Position der Kontaktbereiche verändert. Insbesondere können die Kontaktbereiche in der ausgefahrenen Position oberhalb der Oberkante der Stirnwand angeordnet sein. Zum Beispiel ist der Stromabnehmer derart eingerichtet, dass ein jeweiliger Kontaktbereich des Stromabnehmers in der ausgefahrenen Position einen jeweiligen Kontakt mit dem Kontaktelement einer Ladeinfrastruktur herstellt.

Ferner kann der Stromabnehmer derart eingerichtet sein, dass die zumindest zwei Kontaktbereiche im Wesentlichen die höchsten Bereiche des Stromabnehmer in der ausgefahrenen Position sind. Hierdurch kann beispielsweise erreicht werden, dass die Kontaktbereiche des Stromabnehmers beim Bewegen des Stromabnehmers in die ausgefahrene Position als erste einen Kontakt mit dem elektrischen Kontaktelement einer Ladeinfrastruktur herstellen, wenn das elektrische Kontaktelement einer Ladeinfrastruktur oberhalb des Stromabnehmers angeordnet ist.

Unter dem elektrischen Kontaktelement einer Ladeinfrastruktur soll beispielsweise ein elektrisches Kontaktelement einer externen elektrischen Energieversorgung verstanden werden. Unter einer elektrischen Energieversorgung kann, wie oben offenbart, beispielsweise ein von dem Anhänger externes elektrisches Energieversorgungsnetz (z.B. ein öffentliches Energieversorgungsnetz) und/oder eine von dem Anhänger externe elektrische Energieversorgung (z.B. eine Batterie und/oder ein elektrischer Generator wie ein durch einen Verbrennungsmotor und/oder Windkraft angetriebener elektrischer Generator) verstanden werden. Ein Beispiel für ein solches elektrisches Kontaktelement einer Ladeinfrastruktur ist eine Oberleitung und/oder ein elektrisches Kontaktelement einer Ladestation. Die Ladestation kann beispielsweise an einem sogenannten Ladepunkt angeordnet sein.

Das elektrische Kontaktelement einer Ladeinfrastruktur ist zum Beispiel derart eingerichtet, dass der Stromabnehmer durch die externe elektrische Energieversorgung bereitgestellte elektrische Energie über das elektrische Kontaktelement einer Ladeinfrastruktur konduktiv aufnehmen kann, wenn ein elektrischer Kontakt zwischen dem Stromabnehmer und dem elektrischen Kontaktelement einer Ladeinfrastruktur (z.B. zwischen dem zumindest einen Kontaktbereich des Stromabnehmers und zumindest einem korrespondierenden Kontaktbereich des elektrischen Kontaktelements einer Ladeinfrastruktur) hergestellt ist. Der inverse Stromabnehmer ist zum Beispiel derart eingerichtet, dass das elektrische Kontaktelement für einen inversen Stromabnehmer durch die externe elektrische Energieversorgung bereitgestellte elektrische Energie über den inversen Stromabnehmer konduktiv aufnehmen kann, wenn ein elektrischer Kontakt zwischen dem elektrischem Kontaktelement für einen inversen Stromabnehmer und dem inversen Stromabnehmer einer Ladeinfrastruktur (z.B. zwischen dem zumindest einen Kontaktbereich des elektrischen Kontaktelements für einen inversen Stromabnehmer und zumindest einem korrespondierenden Kontaktbereich des inversen Stromabnehmers einer Ladeinfrastruktur) hergestellt ist.

Der Stromabnehmer kann beispielsweise derart eingerichtet sein, dass er den Kontakt mit dem elektrischen Kontaktelement einer Ladeinfrastruktur im Stillstand des Anhängers herstellen und über diesen elektrische Energie aufnehmen kann.

Auch kann der Stromabnehmer zusätzlich oder alternativ derart eingerichtet sein, dass er den Kontakt mit dem elektrischen Kontaktelement einer Ladeinfrastruktur während der Fahrt herstellen kann. Hierfür hat der Stromabnehmer insbesondere eine ausreichende mechanische Belastbarkeit, um den Stromabnehmer trotz eventuell auftretenden Reibungskräfte zwischen elektrischem Kontaktelement einer Ladeinfrastruktur und Stromabnehmer und/oder daraus resultierenden Hebelkräften standhalten zu können. Beispielsweise kann das elektrische Kontaktelement einer Ladeinfrastruktur hierbei als Oberleitung ausgeführt sein.

Gemäß einem Ausführungsbeispiel des Anhängers ist der Stromabnehmer als Bügelstromabnehmer, insbesondere als Scherenstromabnehmer, Dreiecksbügel, Einholmstromabnehmer und/oder Kombinationen hieraus, ausgebildet.

Gemäß einem Ausführungsbeispiel des Anhängers
- ist der Stromabnehmer dazu eingerichtet, entlang einer Ausfahrebene von der eingefahrenen Position in die ausgefahrene Position bewegt zu werden, wobei die Ausfahrebene im Wesentlichen senkrecht zur Fahrtrichtung ausgerichtet ist.

Der Stromabnehmer kann also dazu eingerichtet sein, entlang einer Ausfahrebene von der eingefahrenen Position in die ausgefahrene Position bewegt zu werden. Beispielsweise kann ebenfalls das Einfahren von der ausgefahrenen Position in die eingefahrene Position entlang der Ausfahrebene geschehen.

Unter der Ausfahrebene soll beispielsweise die Ebene im Raum verstanden werden, entlang derer sich die beweglichen Elemente des Stromabnehmers beim Ausfahren und/oder Einfahren des Stromabnehmers bewegen. Insbesondere bewegen sich im Wesentlichen alle Punkte der beweglichen Teile des Stromabnehmers beim Ausfahren und/oder Einfahren in jeweiligen Bahnen, welche im Wesentlichen parallel zur Ausfahrebene verlaufen (z.B. abgesehen von zufälligen Abweichungen durch Toleranzen der Lagerung der beweglichen Teile).

Beispielsweise kann der Stromabnehmer zumindest ein drehbar gelagertes Element aufweisen, welches sich in der Ausfahrebene um seine Lagerung herum dreht. Insbesondere kann der Stromabnehmer als Scherenstromabnehmer, auch Pantographenabnehmer genannt, gebildet sein oder eine solche umfassen. Der Scherenstromabnehmer kann sich in einer Ausfahrebene ausfahren und/oder einfahren lassen.

Die Ausfahrebene kann beispielsweise im Wesentlichen senkrecht zur Fahrtrichtung und parallel zur Stirnwand verlaufen. Hierdurch kann erreicht werden, dass das Volumen, welches der Stromabnehmer über alle seine Positionen zwischen und einschließlich der eingefahrenen Position und der ausgefahrenen Position einnimmt, in Fahrtrichtung begrenzt bleibt. Ferner ermöglicht ein solcher Verlauf der Ausfahrebene, eine kurze Ausdehnung des Stromabnehmers in der Fahrtrichtung vorzusehen. Dabei soll unter einer kurzen Ausdehnung des Stromabnehmers in der Fahrtrichtung insbesondere eine kürze Ausdehnung des Stromabnehmers in der Fahrtrichtung im Vergleich zur Ausdehnung des Stromabnehmers in seitlicher Richtung verstanden werden.

Es wurde erkannt, dass das verfügbare Volumen, in dem der Stromabnehmer angeordnet werden kann, an der Stirnwand des Anhängers in Fahrtrichtung, also beispielsweise zwischen der Zugmaschine und der Stirnwand des Anhängers, begrenzt ist. Dahingegen ist das verfügbare Volumen in seitlicher Richtung, weniger stark beschränkt. Dementsprechend ermöglicht ein Verlauf der Ausfahrebene im Wesentlichen senkrecht zur Fahrtrichtung und parallel zur Stirnwand eine besonders gute Ausnutzung des verfügbaren Volumens, in dem der Stromabnehmer angeordnet werden kann.

Gemäß einem Ausführungsbeispiel des Anhängers
überragt das elektrische Kontaktelement für einen inversen Stromabnehmer oder der Stromabnehmer, sowohl in der ausgefahrenen Position als auch in der eingefahrenen Position, keine Seitenkante der Stirnwand und/oder Seitenwand des Anhängers.

Wenn der Stromabnehmer oder das elektrische Kontaktelement für einen inversen Stromabnehmer keine Seitenkante der Stirnwand überragt, ist hiermit insbesondere gemeint, dass die Projektion des Stromabnehmers oder des elektrischen Kontaktelements für einen inversen Stromabnehmer auf die Stirnwand zwischen den Seitenkanten der Stirnwand angeordnet ist. Wenn der Stromabnehmer oder das elektrische Kontaktelement für einen inversen Stromabnehmer keine Seitenwand des Anhängers überragt, ist hiermit beispielsweise gemeint, dass der Stromabnehmer oder das elektrische Kontaktelement für einen inversen Stromabnehmer innerhalb einer gedachten Verlängerung der Seitenwände des Anhängers in Fahrtrichtung zwischen den Seitwänden angeordnet ist. Somit steht der Stromabnehmer oder das elektrische Kontaktelement für einen inversen Stromabnehmer insbesondere nicht seitlich über die Stirnwand und/oder die Seitenwände hinaus. Der Stromabnehmer oder das elektrische Kontaktelement für einen inversen Stromabnehmer ist folglich innerhalb der Seitenkanten der Stirnwand und/oder der Seitenwände des Anhängers angeordnet.

Der Strömabnehmer überragt die Seitenkanten der Stirnwand insbesondere weder in der ausgefahrenen Position noch in der eingefahrenen Position. Beispielsweise überragt der Stromabnehmer oder das elektrische Kontaktelement für einen inversen Stromabnehmer die Seitenkanten auch in keiner weiteren Position des Stromabnehmers, insbesondere nicht der Stromabnehmer in einer Übergangsposition beim Einfahren und/oder Ausfahren.

Gemäß einem Ausführungsbeispiel des Anhängers umfasst der Anhänger eine Einhausung des Stromabnehmers oder des elektrischen Kontaktelements für einen inversen Stromabnehmer. Die Einhausung kann beispielsweise dazu eingerichtet sein, den Stromabnehmer oder das elektrische Kontaktelement für einen inversen Stromabnehmer zumindest teilweise, insbesondere den Stromabnehmer in der eingefahrenen Position, zu umgeben, insbesondere auf der in Fahrtrichtung weisenden Seite des Stromabnehmers oder des elektrischen Kontaktelements für einen inversen Stromabnehmer. Beispielsweise kann die Einhausung als ein Gehäuse gebildet sein, welches nach oben geöffnet ist. Alternativ oder zusätzlich kann die Einhausung ein Volumen beschreiben, dass zumindest in Fahrtrichtung hinter dem Stromabnehmer oder dem elektrischen Kontaktelement für einen inversen Stromabnehmer von einer Gehäusewand begrenzt ist. Auf diese Art und Weise kann der Stromabnehmer oder das elektrische Kontaktelement für einen inversen Stromabnehmer, insbesondere der Stromabnehmer in der eingefahrenen Position, vor Fahrtwind und anderen Einflüssen geschützt werden. Auch kann die Einhausung zusätzlich oder alternativ den Stromabnehmer oder das elektrische Kontaktelement für einen inversen Stromabnehmer zumindest im Wesentlichen umlaufend mit Seitenwänden umgeben, sodass die Einhausung in einer Projektion entlang der Schwerkraftrichtung eine im Wesentlichen geschlossene Linie um den Stromabnehmer oder das elektrische Kontaktelement für einen inversen Stromabnehmer herum beschreibt. Hierdurch kann der Stromabnehmer oder das elektrische Kontaktelement für einen inversen Stromabnehmer allseitig gegen Umwelteinflüsse und beispielsweise Vandalismus geschützt sein. Zumindest eine oder im Wesentlichen alle Wandstücke der Einhausung können den Stromabnehmer oder das elektrische Kontaktelement für einen inversen Stromabnehmer überragen, insbesondere den Stromabnehmer in der eingefahrenen Position. Gleichzeitig kann die Einhausung nach oben hin geöffnet sein. Hierdurch ist es weiterhin möglich, dass der Stromabnehmer von der eingefahrenen in die ausgefahrene Position überführt wird oder das elektrische Kontaktelement für einen inversen Stromabnehmer von einem inversen Stromabnehmer von oben kontaktiert wird.

Gemäß einem Ausführungsbeispiel des Anhängers
- umfasst der Stromabnehmer oder das elektrische Kontaktelement für einen inversen Stromabnehmer zumindest zwei elektrische Kontaktbereiche.

Durch die Verwendung von zumindest zwei Kontaktbereichen kann eine Energieübertragung allein durch den Stromabnehmer oder das elektrische Kontaktelement für einen inversen Stromabnehmer ermöglicht werden. Insbesondere ist anders als bei Stromabnehmern oder elektrischen Kontaktelementen für einen inversen Stromabnehmer mit nur einem Kontakt kein bodenseitiger Massekontakt vonnöten.

Gemäß einem Ausführungsbeispiel des Anhängers sind die zumindest zwei elektrischen Kontaktbereiche entlang einer Kontaktreihenachse voneinander beabstandet.

Die Kontaktbereiche des Stromabnehmers oder des elektrischen Kontaktelements für einen inversen Stromabnehmer sind entlang einer Kontaktreihenachse voneinander beabstandet. Insbesondere fluchten die zumindest zwei Kontaktbereiche miteinander in Richtung der Kontaktreihenachse.

Der Stromabnehmer oder das elektrische Kontaktelement für einen inversen Stromabnehmer kann 2, 3, 4, 5, 6, 7, 8, 9, 10 oder mehr Kontaktbereiche umfassen. Beispielsweise können höhere Anzahlen von Kontaktbereichen eine Übertragung von Drehstrom mit beispielsweise drei Phasen ermöglichen. Auch kann beispielsweise zumindest ein Kontaktbereich der Übertragung von Steuersignalen dienen.

Gemäß einem Ausführungsbeispiel des Anhängers sind die Kontaktreihenachse im Wesentlichen parallel oder senkrecht zur Fahrtrichtung ausgerichtet sind.

Die Kontaktreihenachse kann im Wesentlichen parallel zur Fahrtrichtung ausgerichtet sein. Auch kann die Kontaktreihenachse im Wesentlichen senkrecht zur Fahrtrichtung ausgerichtet sein.

Alternativ oder zusätzlich können die Kontaktbereiche im Wesentlichen parallel zur Ausfahrebene ausgerichtet sein. In einer Ausführung kann die Kontaktereihenachse im Wesentlichen senkrecht zur Ausfahrebene ausgerichtet sein. Dies kann den Vorteil haben, dass die Kontaktbereiche beim Überführen des Stromabnehmers von der eingefahrenen in die ausgefahrene Position im Wesentlichen gleichzeitig mit jeweiligen elektrischen Kontakten in Kontakt treten.

Gemäß einem Ausführungsbeispiel des Anhängers umfasst der Anhänger einen Energiespeicher. Der Energiespeicher kann insbesondere als elektrischer Energiespeicher ausgeführt sein, insbesondere als Batterie und/oder Akkumulator. Beispielsweise kann der elektrische Energiespeicher als ein Lithiumionen-Akkumulator ausgeführt sein.

Der elektrische Energiespeicher kann ein Hochspannungsenergiespeicher sein, welcher elektrische Spannungen von zumindest 100V, 200V, 400V, 800V, 1500V 2000V, 4000V, 10kV, 20kV, 50kV oder 100kV bereitstellen kann.

Der elektrische Energiespeicher kann zumindest ein Speichermodul umfassen. Auch sind mehrere Energiespeichermodule denkbar. Durch die Verwendung mehrerer Speichermodule kann die bereitgestellte Spannung und/oder die Kapazität des elektrischen Energiespeichers erhöht werden. Eine Aufteilung des Energiespeichers in Module hat darüber hinaus den Vorteil, dass der elektrische Energiespeicher platzsparend in Teilbereichen des Anhängers verstaut werden kann und sich das Gewicht gleichmäßig verteilt. Die Speichermodule können insbesondere räumlich voneinander getrennt sein. Auch können die Speichermodule in direkter Nähe zueinander, insbesondere einander berührend, angeordnet sein.

Es versteht sich jedoch, dass die vorliegende Offenbarung nicht auf elektrischen Energiespeicher beschränkt ist. Andere Arten von Energiespeichern wie beispielsweise ein Tank für Treibstoffe wie beispielsweise Diesel oder Benzin oder Wasserstoff, oder Kombinationen hieraus sind ebenfalls denkbar.

Der Energiespeicher kann dazu eingerichtet sein, mit durch eine externe Energieversorgung bereitgestellter Energie aufgeladen zu werden. Die durch eine elektrische Energieversorgung bereitgestellte Energie kann beispielsweise über den Stromabnehmer oder das elektrische Kontaktelement für einen inversen Stromabnehmer aufgenommen werden. Ferner kann eine Verbindung zwischen dem Stromabnehmer oder dem elektrischen Kontaktelement für einen inversen Stromabnehmer, insbesondere dem/den Kontaktbereich(en) des Stromabnehmers oder des elektrischen Kontaktelements für einen inversen Stromabnehmer, und dem Energiespeicher vorgesehen sein, über die die von dem Stromabnehmer oder dem elektrischen Kontaktelement für einen inversen Stromabnehmer aufgenommene elektrische Energie dem Energiespeicher zum Laden bereitgestellt werden kann. Die Verbindung zwischen dem Stromabnehmer oder dem elektrischen Kontaktelement für einen inversen Stromabnehmer, insbesondere dem/den Kontaktbereich(en) des Stromabnehmers oder des elektrischen Kontaktelements für einen inversen Stromabnehmer, und dem Energiespeicher umfasst beispielsweise eine oder mehrere elektrische Leitungen. Ferner können in dieser Verbindung ein oder mehrere elektrische und/oder elektronische Bauteile wie ein Schutzfilter und/oder ein Spannungswandler und/oder ein Lademanagementsystem angeordnet sein. Alternativ oder zusätzlich ist auch denkbar, dass der Anhänger einen Anschluss wie einen Stecker oder eine Steckdose (z.B. einen CEE Stecker oder eine CEE Buchse) zur Verbindung mit der externen Energieversorgung umfasst.

Ferner kann alternativ oder zusätzlich vorgesehen sein, dass der Energiespeicher eingerichtet ist, mit durch einen elektrischen Generator des Anhängers bereitgestellter elektrischer Energie aufgeladen zu werden. Der elektrische Generator des Anhängers kann beispielsweise von einem Verbrennungsmotor und/oder durch eine Achse des Anhängers angetrieben werden.

Gemäß einem Ausführungsbeispiel des Anhängers weist der Anhänger einen Anschluss zum Herstellen einer elektrischen Verbindung. auf.

Der Anschluss kann insbesondere als ein Stecker oder eine Buchse ausgebildet sein. Der Anschluss ist insbesondere dazu eingerichtet, eine elektrische Verbindung mit einem motorisierten Nutzfahrzeug zur Übertragung elektrischer Energie herzustellen. Das motorisierte Nutzfahrzeug kann hierbei insbesondere eine Zugmaschine sein, mit welcher der Anhänger gekoppelt werden kann.

Der Anschluss kann auch dazu eingerichtet sein, eine elektrische Verbindung zu einem weiteren Anhänger herzustellen.

Auch kann der Anschluss dazu eingerichtet sein, dass der Anhänger über den Anschluss elektrische Energie empfängt. Beispielsweise kann der Anhänger über den Anschluss elektrische Energie von einem Nutzfahrzeug, insbesondere von einer Zugmaschine, welche insbesondere mit dem Anhänger gekoppelt ist, empfangen. Auch kann der Anschluss dazu eingerichtet sein, an ein Energieversorgungsnetz angeschlossen zu werden, insbesondere derart, dass der Anhänger Energie von dem Energieversorgungsnetz empfängt, beispielsweise aus einer Ladestation oder einem anderweitigen Element einer Ladeinfrastruktur.

Der Anschluss kann folglich einen bidirektionalen Energiefluss von und zu dem Anhänger ermöglichen. Auch möglich ist es, dass der Anschluss lediglich unidirektional entweder von dem Anhänger oder zu dem Anhänger einen elektrischen Energiefluss ermöglicht.

Der Anschluss kann, falls er eine Buchse und/oder einen Stecker umfasst, an die Geometrie in einer Ladestation angepasst sein (beispielsweise als Type 1 J1772, Type 2 Mennekes, CHAdeMo, CCS Combo Type 1, CCS Combo Type 2, GB/T oder Supercharger) und/oder einen regulären Stromstecker (beispielsweise ein CEE Stecker) umfassen.

Gemäß einem Ausführungsbeispiel des Anhängers ist der Energiespeicher dazu eingerichtet, elektrische Energie zum Betreiben eines oder mehrerer Verbraucher des Anhängers und/oder eines oder mehrerer Verbraucher eines mit dem Anhänger gekoppelten motorisierten Nutzfahrzeugs (z.B. einer Zugmaschine) bereitzustellen. Zu diesem Zweck kann eine jeweilige Verbindung zwischen dem Energiespeicher und dem jeweiligen Verbraucher vorgesehen sein, über die der Energiespeicher dem jeweiligen Verbraucher elektrische Energie zum Betreiben des jeweiligen Verbrauchers bereitstellen kann. Die jeweilige Verbindung zwischen dem Energiespeicher und dem jeweiligen Verbraucher umfasst beispielsweise eine oder mehrere elektrische Leitungen. Ferner können in der jeweiligen Verbindung ein oder mehrere elektrische und/oder elektronische Bauteile wie ein Schutzfilter und/oder ein Spannungswandler und/oder eine Steckverbindung angeordnet sein.

Beispiele für einen Verbraucher des Anhängers sind eine Transportkältemaschine, ein Antrieb des Anhängers, eine Telematikeinheit, eine Lampe (z.B. eine im Laderaum des Anhängers angeordnete Lampe), eine Einrichtung zur automatisierten Prüfung eines Reifendrucks und/oder eine Kamera. Ein Beispiel für einen Verbraucher des motorisierten Nutzfahrzeugs ist ein Antrieb des motorisierten Nutzfahrzeugs.

Gemäß einem Ausführungsbeispiel des Anhängers umfasst der Anhänger ferner:
- eine Positionierungseinrichtung, die eingerichtet, eine Position des Anhängers zu bestimmen.

Die Positionierungseinrichtung kann beispielsweise Teil einer Telematikeinheit des Anhängers sein.

Die Positionierungseinrichtung kann beispielsweise ein Positionssensor eines oder mehrerer Globaler Navigationssatellitensystems (Engl: Global Navigation Satellite System, GNSS) wie beispielsweise Navstar GPS, Galileo, Glonass und/oder Beidou sein oder einen solchen Positionssensor umfassen. Ein Positionssensor eines Globalen Navigätionssatellitensystems ist beispielsweise eingerichtet, die Position des Anhängers absolut, beispielsweise in einem globalen Koordinatensystem wie dem WGS 84 (World Geodetic System 1984), zu bestimmen.

Die Positionierungseinrichtung kann insbesondere alternativ oder zusätzlich eine Positionierung anhand von Funksignalen ermöglichen. Beispielsweise kann die Positionierungseinrichtung eine Position des Anhängers basierend auf Mobilfunk-, WLAN- und/oder Bluetooth-Funksignalen bestimmen. Zu diesem Zweck kann die Positionierungseinrichtung eine Funkkommunikationsschnittstelle wie eine Mobilfunk-, WLAN- und/oder Bluetooth-Funkkommunikationsschnittstelle sein oder eine solche Funkkommunikationsschnittstelle umfassen. Mobilfunkstandards sind beispielsweise 2G, 3G, 4G oder 5G, die durch die 3GPP Organisation spezifiziert werden und unter anderem unter www.3gpp.org abgerufen werden können. WLAN (Engl. Wireless Local Area Network) ist beispielsweise in den Standard der IEEE 802.11-Familie spezifiziert, die derzeit unter www.ieee.org verfügbar sein. Die Bluetooth-Spezifikationen sind derzeit unter www.bluetooth.org verfügbar. Eine solche Funkkommunikationsschnittstelle ist beispielsweise eingerichtet, die Position des Anhängers relativ zu anderen Sende- und/oder Empfangseinrichtungen (z.B. WLAN-Zugangspunkte oder Bluetooth-Beacons oder Mobilfunkbasisstationen) der jeweiligen Funksignale zu bestimmen. Zum Beispiel können die Signallaufzeit (Engl. "Round-Trip-Time") von Funksignalen zwischen der Funkkommunikationsschnittstelle des Anhängers und anderen Sende- und/oder Empfangseinrichtungen bestimmt werden. Aus der jeweiligen Signallaufzeit kann dann der jeweilige Abstand des Anhängers zu der jeweiligen Sende- und/oder Empfangseinrichtung bestimmt werden, um die Position des Anhängers durch Trilateration relativ zu den anderen Sende- und/oder Empfangseinrichtungen zu bestimmen. Die Positionsbestimmung basierend auf Signallaufzeiten (Engl. "Round-Trip-Time") wird beispielsweise durch die WLAN Spezifikation IEEE 802.11mc unterstützt. Alternativ oder zusätzlich kann die Position beispielsweise auch als Position im Empfangsbereich einer Sende- und/oder Empfangseinrichtungen (z.B. eines WLAN-Zugangspunkts oder eines Bluetooth-Beacons oder einer Mobilfunkbasisstation) bestimmt werden.

Unter der Position des Anhängers soll beispielsweise eine Position eines Referenzpunktes des Anhängers verstanden werden. Die Positionierungseinrichtung kann in diesem Falle die Position des Referenzpunktes bestimmen.

Die Positionierungseinrichtung kann im Wesentlichen als eine Komponente gebildet sein. Auch möglich ist es, dass die Positionierungseinrichtung über mehrere Komponenten verfügt und/oder diese umfasst. Beispielsweise kann die Positionierungseinrichtung einen Positionssensor eines Globalen Navigationssatellitensystems und/oder eine Funkkommunikationsschnittstelle umfassen. Ferner kann die Positionierungseinrichtung eine Auswerteeinheit und/oder eine Steuereinheit umfassen. Die Auswerteeinheit und/oder die Steuereinheit können beispielsweise gemeinsam und/oder jeweils in Form eines Mikroprozessors, einer Mikrokontrolleinheit, eines Mikrocontrollers, eines digitaler Signalprozessors (DSP), einer Anwendungsspezifischen Integrierte Schaltung (ASIC) oder eines Field Programmable Gate Arrays (FPGA) implementiert sein.

Gemäß einem Ausführungsbeispiel des Anhängers ist die Positionierungseinrichtung ferner eingerichtet, die Position des Stromabnehmers oder des elektrischen Kontaktelements für einen inversen Stromabnehmer zu bestimmen.

Unter der Position des Stromabnehmers oder des elektrischen Kontaktelements für einen inversen Stromabnehmer soll beispielsweise eine Position eines Referenzpunktes, der sich im Bereich des Stromabnehmers oder des elektrischen Kontaktelements für einen inversen Stromabnehmer und/oder auf dem Stromabnehmer oder dem elektrischen Kontaktelement für einen inversen Stromabnehmer befindet, verstanden werden. Zum Beispiel ist der Referenzpunkt derart gewählt, dass er die Position des/r Kontaktbereich(e) des Stromabnehmers in der ausgefahrenen Position oder des elektrischen Kontaktelements für einen inversen Stromabnehmer repräsentiert. Zum Beispiel ist die Positionierungseinrichtung, wie oben offenbart, eingerichtet, die Position des Referenzpunktes zu bestimmen.

Die Position des Stromabnehmers oder des elektrischen Kontaktelements für einen inversen Stromabnehmer kann absolut oder relativ bestimmt werden.

Wenn die Position des Stromabnehmers oder des elektrischen Kontaktelements für einen inversen Stromabnehmer relativ bestimmt wird, kann die Position des Stromabnehmers beispielsweise relativ zu einer Ladeinfrastruktur (z.B. einer Ladestation) und/oder einem Teil der Ladeinfrastruktur bestimmt werden. Insbesondere kann die Position des Stromabnehmers relativ zu einem elektrischen Kontaktelement einer Ladeinfrastruktur (z.B. einer Oberleitung)oder des elektrischen Kontaktelements für einen inversen Stromabnehmer relativ zu einem inversen Stromabnehmer einer Ladeinfrastruktur bestimmt werden.

Die Positionierungseinrichtung kann dazu eingerichtet sein, die Position des Stromabnehmers oder des elektrischen Kontaktelements für einen inversen Stromabnehmer quantitativ zu bestimmen. Eine relative Position zwischen dem Stromabnehmer oder des elektrischen Kontaktelements für einen inversen Stromabnehmer und der Ladeinfrastruktur kann beispielsweise ein in Form eines Distanzvektor zwischen der Position des Stromabnehmers oder des elektrischen Kontaktelements für einen inversen Stromabnehmer und der Position der Ladeinfrastruktur quantitativ bestimmt werden. Eine absolute Position des Stromabnehmers oder des elektrischen Kontaktelements für einen inversen Stromabnehmer kann beispielsweise in Form von Koordinaten eines globalen Koordinatensystems oder eines globalen Satellitennavigationssystems bestimmt werden. Insbesondere ermöglicht eine quantitative Bestimmung der Position eine exakte Quantifizierung, ist allerdings womöglich weniger gut geeignet, um von einem menschlichen Bediener interpretiert zu werden.

Die Positionierungseinrichtung kann alternativ oder zusätzlich dazu eingerichtet sein, die Position des Stromabnehmers oder des elektrischen Kontaktelements für einen inversen Stromabnehmer qualitativ zu bestimmen. Eine qualitative Bestimmung einer Position kann hierbei insbesondere eine Kategorisierung der Position (z.B. basierend auf einer quantitativ bestimmten Position) vornehmen. Beispielsweise kann eine Position qualitativ bestimmt werden, indem der Position eine von mehreren Kategorien als Positionsangabe zugeordnet wird, die die Lage der Position relativ zu einer Referenzposition (z.B. der Position einer Ladeinfrastruktur) beschreibt. Eine solche qualitative Positionsangabe kann beispielsweise die Distanz der Position zu der Referenzposition (z.B. einer Position einer Ladeinfrastruktur) als "im Wesentlichen identisch", "sehr nah", "nah", "weit", "sehr weit" beschreiben.

Beispielsweise kann die qualitative Position des Stromabnehmers oder des elektrischen Kontaktelements für einen inversen Stromabnehmer abhängig vom Fahrkontext des Anhängers bestimmt werden. Der Fahrkontext des Anhängers gibt die Situation an, in welcher sich der Anhänger momentan befindet. Beispielsweise kann der Anhänger sich auf einer Fahrt entlang einer Autobahn befinden. In einem anderen Beispiel könnte sich der Anhänger an einer Tankstelle oder in einem Logistikzentrum befinden. Fahrkontexte können beispielsweise anhand ihrer typischen Durchschnittsgeschwindigkeit des Anhängers in dem jeweiligen Fahrkontext unterschieden und/oder klassifiziert werden.

Dadurch, dass die qualitative Positionsangabe abhängig von dem Fahrkontext bestimmt wird, können die Kategorien von Positionsangaben an den jeweiligen Fahrkontext angepasst gewählt werden. Insbesondere kann die Feinheit der Einteilung von Distanzangaben abhängig vom Fahrkontext sein und/oder gewählt werden. In Fahrkontexten mit niedrigen Durchschnittsgeschwindigkeiten kann die Einteilung beispielsweise feiner sein als in Fahrkontexten mit höheren Durchschnittsgeschwindigkeiten. Beispielsweise kann die qualitative Positionsangabe für ein Rangiermanöver in der Nähe einer Referenzposition wie einer Ladeinfrastruktur eine feinere Einteilung von Entfernungskategorien gewählt werden als auf einer Autobahn. Beispielsweise könnte bei einem Rangiermanöver eine Einteilung einer Distanz zu der Referenzposition anhand von einzelnen Metern oder sogar Bruchteilen von Metern in Kategorien wie beispielsweise "sehr nah (< 0,5m)", "nah (<1m)", "entfernt (<3m)", "weit entfernt (>10m)" oder ähnlich vorgenommen werden. Für einen Fahrkontext, in dem höhere Geschwindigkeiten erreicht werden, kann die qualitative Positionsangabe in gröberen Einteilungen anhand der Distanz zu der Referenzposition, beispielsweise "sehr nah (< 100m)", "nah (<500m)", "entfernt (<2km)", "weit entfernt (>10km)" oder ähnlich.

Gemäß einem Ausführungsbeispiel des Anhängers umfasst der Anhänger Mittel zur autonomen oder semiautonomen Steuerung.

Unter einer autonomen Steuerung soll beispielsweise eine Steuerung verstanden werden, die unabhängig von Steuerbefehlen, insbesondere augenblicklichen Steuerbefehlen, des Bedieners abläuft. Der Bediener kann jedoch auch bei einer solchen autonomen Steuerung weiterhin Anforderungen an die Steuerung stellen, wie beispielsweise ein Ziel angeben und/oder beispielsweise das Herstellen einer Verbindung mit einer Ladeinfrastruktur anfordern. Die konkrete augenblickliche Steuerung des Anhängers, wie beispielsweise Lenkung und/oder Beschleunigung und/oder Abbremsung, werden allerdings unabhängig vom Bediener gesteuert.

Zu diesem Zweck kann eine autonome Steuerung beispielsweise eine direkte Ansteuerung zumindest eines Aktors (z.B. eines Motor) des Anhängers umfassen. Eine autonome Steuerung kann ebenfalls eine Ansteuerung eines motorisierten Nutzfahrzeugs, insbesondere einer Zugmaschine, insbesondere einer Zugmaschine, mit der der Anhänger gekoppelt ist, umfassen. Beispielsweise können die Mittel zur autonomen Steuerung des Anhängers einen Antriebsmotor und/oder eine Lenkung des Anhängers und/oder des mit ihm gekoppelten motorisierten Nutzfahrzeuge ansteuern. Auch können die Mittel zur autonomen Steuerung des Anhängers das Bewegen des Stromabnehmers von der eingefahrenen Position in die ausgefahrene Position und/oder umgekehrt steuern, beispielsweise indem sie einen Aktor des Stromabnehmers ansteuern.

Unter einer semiautonomen Steuerung soll insbesondere eine Steuerung verstanden werden, die den Bediener bei der augenblicklichen Steuerung des Anhängers unterstützt. Zu diesem Zweck können die Mittel zur semiautonomen Steuerung eine Anzeige einer für die Steuerung nützlichen, zweckdienlichen, wesentlichen und/oder anderweitig relevanten Information realisieren. Die Mittel zur Steuerung können in diesem Falle beispielsweise also eine Ausgabe von Informationen zur Unterstützung des Bedieners umfassen. Alternativ oder zusätzlich können die Mittel zur semiautonomen Steuerung Steuerbefehle eines Bedieners (z.B. betreffend Lenkung und/oder Beschleunigung und/oder Abbremsung) beispielsweise verstärken oder abschwächen. Eine semiautonome Steuerung hat den Vorteil einer deutlichen Vereinfachung der Bedienung des Fahrzeugs bei gleichzeitig deutlich vereinfachter Realisierbarkeit verglichen mit einer autonomen Steuerung.

Insbesondere kann eine semiautonome Steuerung die Anzeige einer Information umfassen, welche den Bediener in der Bedienung des Anhängers unterstützt. Eine solche Information kann beispielsweise die gegenwärtige Distanz des Stromabnehmers oder des elektrischen Kontaktelements für einen inversen Stromabnehmer zu zumindest einem Referenzposition wie einer Ladeinfrastruktur (z.B. einem elektrischen Kontaktelement der Ladeinfrastruktur oder einem inversen Stromabnehmer der Ladeinfrastruktur) beinhalten. Diese Information kann qualitativ oder quantitativ im oben beschriebenen Sinne angezeigt werden.

Auch kann beispielsweise Steuerbefehle des Bedieners durch die Mittel zur semiautonomen Steuerung beeinflusst werden. Zum Beispiel kann die Sensitivität der Lenkung in Abhängigkeit von einem Fahrkontext angepasst werden. Beispielsweise kann in der Nähe einer Referenzposition, welche beispielsweise auf Basis der Position, welche von einer Positionierungseinrichtung bestimmt wurde, bestimmt werden, eine erhöhte Sensitivität der Lenkung eingestellt werden. Gleichermaßen können das Beschleunigungs- und/oder Abbremsverhalten beeinflusst werden. Dies kann das Rangierverhalten des Anhängers und/oder eines Gespanns aus Anhänger und einem damit gekoppelten motorisierten Nutzfahrzeug, vereinfachen.

Die Mittel zur autonomen oder semiautonomen Steuerung können ein oder mehrere Mittel umfassen. Beispiele für solche Mittel zur autonomen oder semiautonomen Steuerung sind ein Mikroprozessor, eine Mikrokontrolleinheit, ein Mikrocontroller, ein digitaler Signalprozessor (DSP), eine Anwendungsspezifische Integrierte Schaltung (ASIC) oder eine Field Programmable Gate Array (FPGAs).

Gemäß einem Ausführungsbeispiel des Anhängers sind die Mittel zur autonomen oder semiautonomen Steuerung dazu eingerichtet, eine Annäherung des Stromabnehmers oder des elektrischen Kontaktelements für einen inversen Stromabnehmer an eine Ladeinfrastruktur durch eine Bewegung des Anhängers zu steuern und/oder zu unterstützen.

Das Steuern und/oder Unterstützen der Annäherung des Stromabnehmers oder des elektrischen Kontaktelements für einen inversen Stromabnehmer an eine Ladeinfrastruktur durch eine Bewegung des Anhängers kann beispielsweise basierend auf einer durch die Positionierungseinrichtung bestimmte Position des Anhängers erfolgen. Hierbei kann die Position beispielsweise empfangen werden, beispielsweise mittels eines Kommunikationsbusses öder einer anderweitigen Kommunikationsverbindung. Auch können die Mittel zur Steuerung und die Positionierungseinrichtung miteinander integriert sein.

Die Mittel zur autonomen oder semiautonomen Steuerung sind beispielsweise dazu eingerichtet, einen Antriebsmotor und/oder eine Lenkung des Anhängers und/oder des mit dem Anhänger gekoppelten motorisierten Nutzfahrzeuge derart autonom anzusteuern, dass eine Bewegung des Anhängers bewirkt wird, die den Stromabnehmer oder das elektrische Kontaktelement für einen inversen Stromabnehmer an die Ladeinfrastruktur annähert. Dabei soll der Stromabnehmer durch die Bewegung beispielsweise derart an die Ladeinfrastruktur angenähert werden, dass der Stromabnehmer in der ausgefahrenen Position eine Verbindung zu einem Kontaktelement der Ladeinfrastruktur herstellen kann, oder das elektrische Kontaktelement für einen inversen Stromabnehmer von einem inversen Stromabnehmer der Ladeinfrastruktur kontaktiert werden kann (z.B. in einer ausgefahrenen Position des inversen Stromabnehmers der Ladeinfrastruktur).

Alternativ oder zusätzlich können die Mittel zur autonomen oder semiautonomen Steuerung den Bediener dabei unterstützen, eine Bewegung des Anhängers zu bewirken, die den Stromabnehmer oder das elektrische Kontaktelement für einen inversen Stromabnehmer an die Ladeinfrastruktur annähert. Zum Beispiel können die Mittel zur autonomen oder semiautonomen Steuerung eingerichtet sein, zu veranlassen, dass dem Bediener eine quantitative Position (z.B. in Form eines Distanzvektors) oder qualitative Position (z.B. in Form einer kategorisierten Distanzangabe wie "im Wesentlichen identisch", "sehr nah", "nah", "weit", "sehr weit") des Stromabnehmers oder des elektrischen Kontaktelements für einen inversen Stromabnehmer relativ zu der Position der Ladeinfrastruktur angezeigt wird. Außerdem können die Mittel zur autonomen oder semiautonomen Steuerung eingerichtet sein, die Steuerbefehle des Bedieners abhängig von der quantitativen Position oder qualitativen Position des Stromabnehmers oder des elektrischen Kontaktelements für einen inversen Stromabnehmer relativ zu der Position der Ladeinfrastruktur zu beeinflussen. Zum Beispiel kann dadurch die Sensitivität der Lenkung erhöht werden, sobald die Distanz zwischen dem Stromabnehmer oder dem elektrischen Kontaktelement für einen inversen Stromabnehmer und der Ladeinfrastruktur kleiner oder gleich einer vorgegebenen Schwelle (z.B. "sehr nah" oder "nah") ist. Gleichermaßen können das Beschleunigungs- und/oder Abbremsverhalten beeinflusst werden (z.B. indem die Sensitivität des Gaspedals erniedrigt und die Sensitivität des Bremspedals erhöht wird, sobald die Distanz zwischen dem Stromabnehmer oder dem elektrischen Kontaktelement für einen inversen Stromabnehmer und der Ladeinfrastruktur kleiner oder gleich der vorgegebenen Schwelle ist).

Nachfolgend wird der Gegenstand anhand einer Ausführungsbeispiele zeigenden Zeichnung näher beschrieben. In der Zeichnung zeigen
- Fig. 1a-c: eine schematische Darstellung eines offenbarten Anhängers gemäß einem Ausführungsbeispiel sowie eine Ladeinfrastruktur;
- Fig. 2: einen schematischen Schaltplan einer Ladeinfrastruktur sowie eines Anhängers gemäß einem Ausführungsbeispiel.

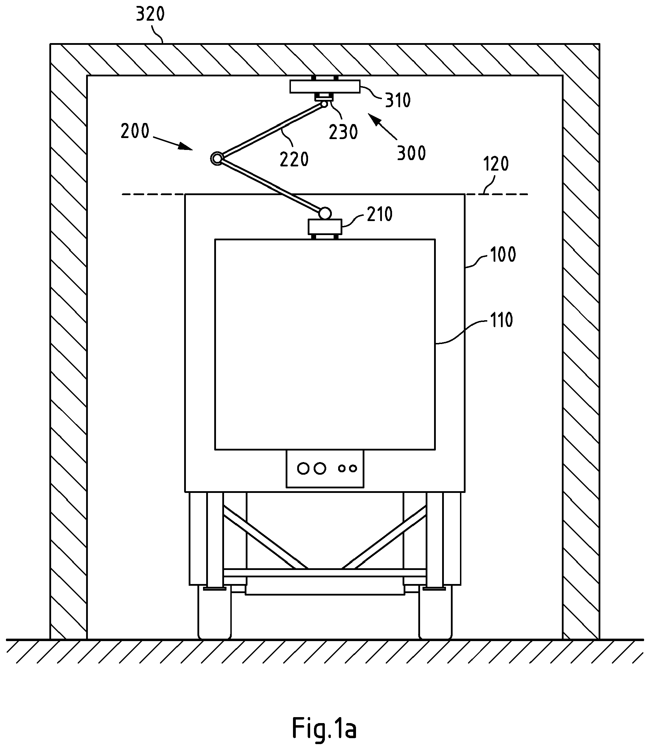

Figur 1a zeigt eine schematische Ansicht eines offenbarten Anhängers 100. Zu sehen ist eine frontale Ansicht der Stirnwand, wobei die Fahrtrichtung aus der Zeichenebene heraus weist. An der Stirnwand ist eine Transportkältemaschine 110 angeordnet. Oberhalb der Transportkältemaschine ist ein Stromabnehmer 200 positioniert. Der Stromabnehmer weist einen unbeweglichen Teil 210 auf sowie einen beweglichen Teil 220. Der bewegliche Teil 220 weist in der gezeigten Ausführung zwei Arme auf, welche durch ein Gelenk verbunden sind. Auch ist der untere bewegliche Arm mit einem Gelenk mit dem unbeweglichen Teil des Stromabnehmers 200 verbunden. Die Gelenke können beispielsweise motorisiert sein. An dem oberen Ende des Stromabnehmers 200 befindet sich zumindest ein elektrischer Kontaktbereich 230.

Gezeigt ist die ausgefahrene Position des Stromabnehmers 200. In dieser Position überragt der Stromabnehmer 200 eine Oberkante 120 des Anhängers 100.

Auch zeigt Figur 1a eine Ladeinfrastruktur 300. Die Ladeinfrastruktur 300 umfasst ein Gerüst 320 an welchem eine Ladestation 310 angeordnet ist Der Stromabnehmer 200 kommt mit seinem Kontaktbereich 230 in Kontakt mit einem Kontaktelement der Ladestation 310 der Ladeinfrastruktur 300. Auf diese Art und Weise kann der Anhänger 100 mittels des Stromabnehmers 200 von der Ladestation 310 bereitgestellte elektrische Energie beziehen.

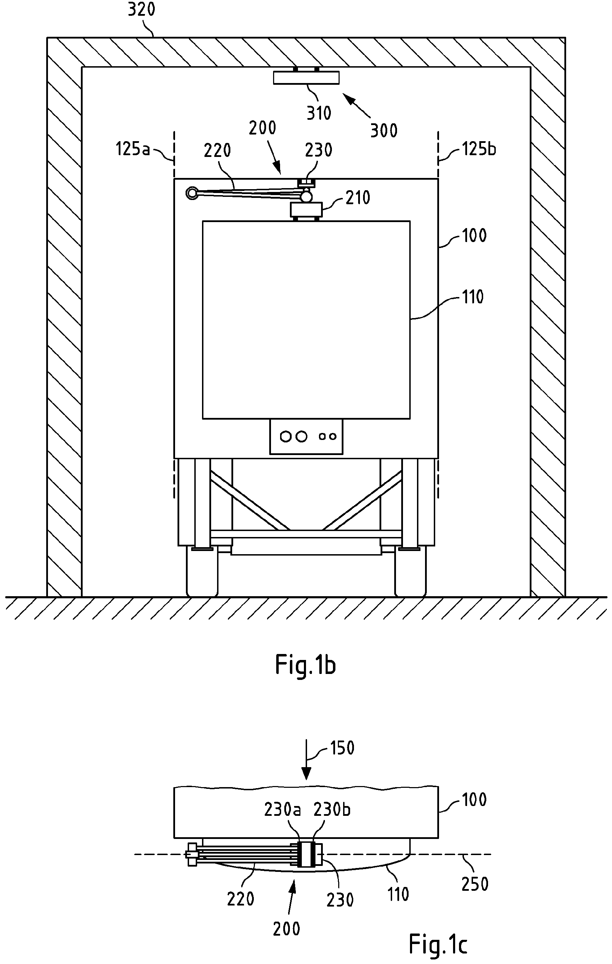

Figur 1b zeigt einen offenbarten Anhänger 100 mit einem Stromabnehmer 200 in der eingefahrenen Position. In dieser Position ist der Stromabnehmer 200 vollständig unterhalb der Oberkante 120 des Anhängers 100 angeordnet. Auch überragt der Stromabnehmer 200 nicht die Seitenkanten 125a, 125b der Stirnwand des Trailers 100. Dadurch, dass der Stromabnehmer 200 innerhalb der Fläche der Stirnwand des Anhängers 100 angeordnet ist (in Projektion in Fahrtrichtung), und deren Kanten insbesondere nicht überragt, werden die Größenanforderungen an den Anhänger 100 nicht von dem Stromabnehmer 200 verletzt. Auch ist der Stromabnehmer 200 gegenüber Fahrtwind und anderen Umwelteinflüssen geschützt.

Figur 1c zeigt eine Draufsicht auf den Anhänger 100 im Bereich dessen Stirnwand, an welcher die Transportkältemaschine 110 sowie der Stromabnehmer 200 angeordnet sind. Zu erkennen ist, dass der Stromabnehmer 200 die Transportkältemaschine 110 in Fahrtrichtung nicht überragt. Dies wird insbesondere dadurch ermöglicht, dass die Ausfahrebene 250 des Stromabnehmers 200 im Wesentlichen senkrecht zur Fahrtrichtung 150 des Anhängers 100 ausgerichtet ist. Ferner ist zu erkennen, dass die Fläche, welche von dem unbeweglichen Teil 210 des Stromabnehmers 200 eingenommen wird, nur einen kleinen Bruchteil der Fläche der Transportkältemaschine 210 in Projektion entlang der Schwerkraftrichtung einnimmt. Der Stromabnehmer 200 stellt somit keine Behinderung der Wärmeabgabe der Transportkältemaschine 110 nach oben hin dar. Im Gegenteil kann die verästelte Struktur des Stromabnehmers 200 einer Wärmeabgabe über den Stromabnehmer 200, insbesondere dessen bewegliche Teile 220, zuträglich sein. Ferner ist in Figur 1c zu erkennen, dass der Stromabnehmer 200 zwei Kontaktbereiche 230a, 230b aufweist. Die Kontaktbereiche 230a, 230b sind insbesondere voneinander elektrisch isoliert.

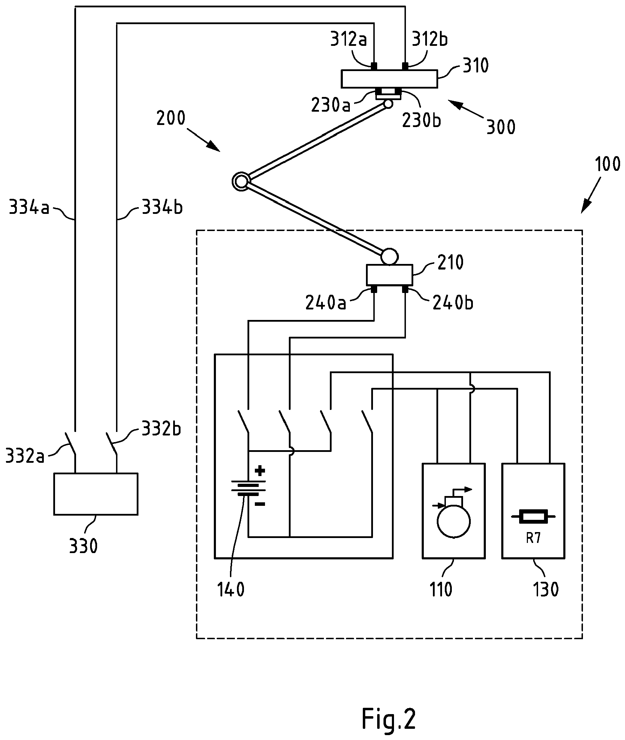

Figur 2 zeigt einen schematischen Schaltplan umfassend eine Ladeinfrastruktur 301 offenbarten Anhänger 100 gemäß einem Ausführungsbeispiel. Die Ladeinfrastruktur 300 umfasst eine Stromquelle 330, welche insbesondere als eine Gleichstromstromquelle ausgebildet sein kann. Die Stromquelle 330 kann insbesondere als Ladestationsstromquelle 330 ausgebildet sein. Zwei Schalter 232a, 232b können die Stromquelle 330 von Zuleitungen 334a, 334b zu einer ebenfalls von der Ladeinfrastruktur umfassten Ladestation 310 trennen und verbinden. Der Anhänger 100 ist mittels des ausgefahrenen Stromabnehmers 200 mit der Ladestation 310 der Ladeinfrastruktur 300 mechanisch und/oder elektrisch verbunden. Insbesondere sind zumindest zwei elektrische Kontakte 312a, 312b seitens der Ladestation 310 mit zwei elektrischen Kontakten 240a, 240b des Stromabnehmers 200 mittels der Kontaktbereiche 230a, 230b verbunden. Durch die gezeigte zweipolige Verbindungsart zwischen Ladestation 310 und Stromabnehmer 200 kann insbesondere ein geschlossener Stromkreis mit Hinführung und Abführung erreicht werden.

Der Anhänger 100 umfasst einen Energiespeicher 140, welcher mit der Ladestation 310 über den Stromabnehmer 200 geladen werden kann. Der Anhänger 100 umfasst ferner eine Transportkältemaschine 110, welche insbesondere über den Energiespeicher 240 und/oder direkt über den Stromabnehmer 200 mit elektrischer Energie versorgt werden kann. Auch umfasst der Anhänger 100 andere Verbraucher 130, welche beispielsweise Assistenzsysteme, Laderaumbeleuchtung oder andere untergeordnete Funktionen des Anhängers 100 erfüllen.

## Patentansprüche

1. Anhänger (100) für Straßenfahrzeuge umfassend
- (i) einen aus einer eingefahrenen Position in eine ausgefahrene Position ausfahrbaren Stromabnehmer (200), wobei
der Stromabnehmer (200) benachbart zu einer in eine Fahrtrichtung (150) des Anhängers (100) weisenden Stirnwand des Anhängers (100) angeordnet ist, wobei
der Stromabnehmer (200) in der eingefahrenen Position vollständig unterhalb einer Oberkante (120) der Stirnwand angeordnet ist, und wobei der Stromabnehmer (200) in der ausgefahrenen Position die Oberkante (120) der Stirnwand zumindest teilweise nach oben überragt. oder
- (ii) ein elektrisches Kontaktelement für einen inversen Stromabnehmer, wobei das elektrische Kontaktelement für einen inversen Stromabnehmer benachbart zu einer in eine Fahrtrichtung (150) des Anhängers (100) weisenden Stirnwand des Anhängers (100) angeordnet ist, wobei
das elektrische Kontaktelement für einen inversen Stromabnehmer vollständig unterhalb einer Oberkante (120) der Stirnwand angeordnet ist.

2. Anhänger (100) nach Anspruch 1, wobei an der Stirnwand ein Gehäuse einer Transportkältemaschine (110) angeordnet ist, wobei der Stromabnehmer (200) oder das elektrische Kontaktelement für einen inversen Stromabnehmer zumindest teilweise oberhalb des Gehäuses der Transportkältemaschine (110) und/oder seitlich des Gehäuses der Transportkältemaschine (110) Transportkältemaschine angeordnet ist, insbesondere der Stromabnehmer (200) in der eingefahrenen Position.

3. Anhänger (100) nach Anspruch 2, wobei der Stromabnehmer (200) an dem Gehäuse der Transportkältemaschine (110) befestigt ist.

4. Anhänger (100) nach einem der Ansprüche 1 - 3, wobei der Stromabnehmer (200) dazu eingerichtet ist, in der ausgefahrenen Position einen Kontakt mit einem elektrischen Kontaktelement einer Ladeinfrastruktur (240), herzustellen, öder wobei das elektrische Kontaktelement für einen inversen Stromabnehmer dazu eingerichtet ist, einen Kontakt mit einem inversen Stromabnehmer einer Ladeinfrastruktur herzustellen.

5. Anhänger (100) nach einem der Ansprüche 1 - 4, wobei der Stromabnehmer (200) als Bügelstromabnehmer, insbesondere als Scherenstromabnehmer, Dreiecksbügel, Einholmstromabnehmer und/oder Kombinationen hieraus, ausgebildet ist.

6. Anhänger (100) nach einem der Ansprüche 1 - 5, wobei der Stromabnehmer (200) dazu eingerichtet ist, in einer Ausfahrebene (250) von der eingefahrenen Position in die ausgefahrene Position bewegt zu werden, wobei die Ausfahrebene (250) im Wesentlichen senkrecht zur Fahrtrichtung (150) ausgerichtet ist.

7. Anhänger (100) nach einem der Ansprüche 1 - 6, wobei der Stromabnehmer (200) sowohl in der ausgefahrenen Position als auch in der eingefahrenen Position keine Seitenkante (125a, 125b) der Stirnwand und/oder keine Seitenwand des Anhängers überragt.

8. Anhänger (100) nach einem der Ansprüche 1 - 7, wobei der Stromabnehmer (200) oder das elektrisches Kontaktelement für einen inversen Stromabnehmer zumindest zwei elektrische Kontaktbereiche (230a, 230b) umfasst, welche insbesondere entlang einer Kontaktreihenachse voneinander beabstandet sind, wobei die Kontaktreihenachse im Wesentlichen parallel oder senkrecht zur Fahrtrichtung (150) und/oder zur Ausfahrebene (250) ausgerichtet sind.

9. Anhänger (100) nach einem der Ansprüche 1 - 8, ferner umfassend:
- einen Anschluss zum Herstellen einer elektrischen Verbindung.

10. Anhänger (100) nach einem der Ansprüche 1 - 9, wobei der Anhänger (100) einen elektrischen Energiespeicher umfasst.

11. Anhänger (100) nach Anspruch 10, wobei der Energiespeicher dazu eingerichtet ist, elektrische Energie zum Betreiben eines Verbrauchers des Anhängers und/oder eines Verbrauchers eines mit dem Anhänger gekoppelten motorisierten Nutzfahrzeugs bereitzustellen.

12. Anhänger(100) nach einem. der Ansprüche 1 - 11, ferner umfassend:
- eine Positionierungseinrichtung, die eingerichtet ist, eine Position des Anhängers (100) zu bestimmen.

13. Anhänger (100) nach Anspruch 12, wobei die Positionierungseinrichtung eingerichtet ist, die Position des Stromabnehmers (200) oder des elektrischen Kontaktelements für einen inversen Stromabnehmer zu bestimmen, insbesondere relativ zu zumindest einem Teil einer Ladeinfrastruktur (300).

14. Anhänger (100) einem der Ansprüche 1 - 13, wobei der Anhänger (100) Mittel zur autonomen oder semiautonomen Steuerung umfasst.

15. Anhänger (100) nach Anspruch 14, wobei die Mittel zur autonomen oder semiautonomen Steuerung dazu eingerichtet sind, eine Annäherung des Stromabnehmers oder des elektrischen Kontaktelements für einen inversen Stromabnehmer an eine Ladeinfrastruktur durch eine Bewegung des Anhängers zu steuern und/oder zu unterstützen.
